# EUROPEAN PATENT APPLICATION

(11) **EP 4 056 457 A1**
(43) Date of publication of application: **14.09.2022**
(21) Application number: 22158448.5
(22) Date of filing: 24.02.2022
(51) Int. Cl.: B62J 45/412, B62J 45/423, G01P 3/487, B62M 6/50, B62J 45/413

(54) **SPEED SENSING DEVICES AND SYSTEMS FOR A BICYCLE**

(30) Priority: 08.03.2021 US 202163157998 P; 18.06.2021 US 202117351931; 07.12.2021 US 202117544381
(71) Applicant: SRAM, LLC, Chicago, IL 60607 (US)
(72) Inventor: Hahn, Sage, Chicago, 60625 (US); Hoelle, Philipp, 97421 Schweinfurt (DE); Huempfer, Lea, 97616 Bad Neustadt (DE)
(74) Representative: Thum, Bernhard

(57) **Abstract**

A speed sensing system for a bicycle includes a sensing device (102) configured for mounting on the bicycle. The sensing device (102) includes a sensor and a plurality of sensed elements. The sensor is configured for mounting at an angle relative to a horizontal hub plane. The plurality of sensed elements are configured to be sensed by the sensing device (102).

## Description

### PRIORITY

This application claims the benefit of U.S. Provisional Patent Application No. 63/157,998, filed March 08, 2021, and U.S. Patent Application No. 17/351,931, filed June 18, 2021, both of which are hereby incorporated by reference in its entirety.

### BACKGROUND

Electric assist bicycles ("e-bikes") are bicycles that are configured such that supplemental motor assistance can be provided to a drive train of the bicycle to aid a rider in powering the bicycle. Regulations may provide that motor assistance be limited or prevented if the bike is traveling above a speed threshold, for example 25 kilometers per hour ("kph"). To prevent motor assistance above a speed threshold the motor control system of the e-bike requires information about the speed of the bicycle. Typically, bicycle speed information is provided by a sensor mounted on a moving part of the drive train. The sensor may detect magnets or other sensed devices mounted to the rear wheel. Typically, the speed sensor may generate one pulse per revolution of the wheel. The time between sensor pulses can be used to calculate the angular velocity of the wheel, for example in revolutions per minute ("RPM"). Combining the wheel RPM with the wheel's circumference, a speed of the bicycle can be calculated. Typically, the wheel circumference is programmed into the non-volatile memory of an e-bike motor controller.

Attempts to prevent the e-bike rider from easily tampering with a speed feedback system in order to increase the maximum speed under which the e-bike system will assist the rider have been attempted. For example, on some e-bikes the programmed wheel circumference is not rider accessible. In another example, some riders attach the wheel speed sensing magnet to the cranks so that the wheel speed appears to be only the rate that the rider is pedaling, which is typically much slower than the wheel speed corresponding to the assist speed limit. Current generation electric mountain bikes may now include software to detect the crank-magnet hack and completely disable the rider assist if tamper is detected.

Riders may find the disabling of rider assist to be inconvenient. Accordingly, there is a need for a speed sensing system that inhibits or prevents tampering, while providing an accurate measurement of the wheel speed.

### SUMMARY

According to one aspect, a speed sensing system for a bicycle includes a sensing device configured for mounting on the bicycle and a plurality of sensed elements. The sensing device includes a sensor configured for mounting at an angle relative to a horizontal hub plane. The plurality of sensed elements are configured to be sensed by the sensing device.

According to another aspect, a speed sensing system for a bicycle includes a sensing device configured for mounting on the bicycle and a plurality of sensed elements. The sensing device includes a sensor configured for mounting on a plane parallel to a horizontal hub plane. The plurality of sensed elements are configured to be sensed by the sensing device.

### BRIEF DESCRIPTION OF DRAWINGS

FIG. 1 is a left-side elevational view of a bicycle according to one embodiment;
FIG. 2 is a partial side view of the rear wheel of FIG. 1 including an example of the speed sensing system;
FIG. 3A is a front view of a disc of the example speed sensing system of FIG. 2;
FIG. 3B is a perspective view of the disc of the example speed sensing system of FIG. 2;
FIG. 3C is a front view of the disc of the example speed sensing system of FIG. 2 including a sensor;
FIG. 3D is a graph showing a sensor output signal of the sensor in FIG. 3C;
FIG. 4 is a partial side view of the rear wheel of FIG. 1 including another example of a speed sensing system;
FIG. 5A is a front view of a disc of the example speed sensing system of FIG. 4;
FIG. 5B is a perspective view of the disc of the example speed sensing system of FIG. 4;
FIG. 5C is a front view of the disc of the example speed sensing system of FIG. 4 including sensors;
FIG. 5D is a front view of the disc of the example speed sensing system of FIG. 4 in a rotated position and including sensors;
FIG. 5E is a graph showing a sensor output signal of the sensors in FIGS. 5C and 5D;
FIG. 5F is a graph showing a sensor output signal in an alternate embodiment;
FIG. 6 is a partial side view of the rear wheel of FIG. 1 including another example of a speed sensing system;
FIG. 7A is a front view of a disc of the example speed sensing device of FIG. 6;
FIG. 7B is a perspective view of the disc of the example speed sensing device of FIG. 6;
FIG. 7C is a front view of the disc of the example speed sensing device of FIG. 6 including sensors;
FIG. 7D is a front view of the disc of the example speed sensing device of FIG. 6 in a rotated position and including sensors;
FIG. 7E is a graph showing a sensor output signal of the sensors in FIGS. 7C and 7D;
FIG. 8A is a front view of the disc of the speed sensing system of FIG. 2, mounted on the hub, in front of the rotor;
FIG. 8B is a cross-section of FIG. 8A taken along axis A-A;
FIG. 9 is a partial side view of the bicycle of FIG. 1 showing the rear wheel including another example of a speed sensing system;
FIG. 10A is a perspective view of a sensed element attached to a wheel spoke of the example speed sensing system of FIG. 9;
FIG. 10B is a partially exploded perspective view of the sensed element of FIG. 10A;
FIG. 11A is a front view of a rotor that is part of another example speed sensing system;
FIG. 11B is a front view of the rotor of the example speed sensing device of FIG. 11A including sensors;
FIG. 11C is a front view of the rotor of the example speed sensing device of FIG. 11A in a rotated position and including sensors;
FIG. 11D is a graph showing a sensor output signal of the sensors in FIGS. 11B and 11C;
FIG. 12 is a front view of a rotor that is part of another example speed sensing system.
FIG. 13A is a front perspective view of a lockring that is part of another example speed sensing system;
FIG. 13B is a rear perspective of the lockring of the example speed sensing system of FIG. 13A;
FIG. 13C is a cross-section of a hub having the lockring of the example embodiment of FIG. 13A;
FIG. 13D is an enlarged view of a portion of FIG. 13C;
FIG. 13E is a cross section of an exploded view of the example embodiment of FIG. 13C;
FIG. 14 is a cross-section of a hub including an embodiment of the sensing device;
FIG. 15A is a perspective view of a housing of the example sensing device of FIG. 14;
FIG. 15B is a rear view of the housing of the example sensing device of FIG. 14;
FIG. 15C is a side view of the housing of the example sensing device housing of FIG. 14;
FIG. 16 is a front view of a disc and sensor of an example speed sensing system according to one embodiment;
FIG. 17 is a cross-section of the disc of FIG. 16 taken along axis Z-Z;
FIG. 18 is an exploded view of the speed sensing system of FIG. 16;
FIG. 19 is an exploded view of a sensing device of FIG. 16;
FIG. 20 is a perspective view of a frame dropout of FIG. 18;
FIG. 21 is a perspective view of the frame dropout of FIG. 18; and
FIG. 22 is a side view of an alternate embodiment of a frame dropout.

Other aspects and advantages of the embodiments disclosed herein will become apparent upon consideration of the following detailed description, wherein similar or identical structures have similar reference numerals.

### DETAILED DESCRIPTION

The present disclosure provides examples of speed sensing devices and systems for a bicycle that improves upon one or more of the above-noted and/or other disadvantages with prior known mechanical and electrical control devices.

For an automatic shifting transmission on an e-bike, where the transmission continues to change gears even if the rider is not pedaling, an accurate measure of wheel speed is required and may be required at a sampling rate greater than once per wheel revolution. One solution to achieving a higher wheel speed sampling rate is to introduce more feedback magnets or sensed elements equally spaced about the wheel. However, this introduces an easy method for a rider to fake a lower than actual wheel speed by removing magnets from the system, increasing the speed up to which motor assist is provided. If the reported speed is artificially reduced the automatic shifting algorithm may not maintain the correct gear selection.

The present disclosure proposes several methods of providing a tamper resistant source of wheel speed to safety critical e-bike subsystems (e.g., speed threshold or top speed assist) while also providing a higher sampling rate signal to non-safety critical subsystems (e.g., automatic shifting).

Various embodiments of the invention will be described herein with reference to the drawings. It will be understood that the drawings and the description set out herein are provided for illustration only and do not limit the invention as defined by the claims appended hereto and any and all their equivalents. For example, the terms "first" and "second", "front" and "rear", "left" and "right" are used for the sake of clarity and not as terms of limitation. Moreover, the terms referred to bicycle mechanisms conventionally mounted to a bicycle and with the bicycle orientated and used in a standard fashion unless otherwise indicated.

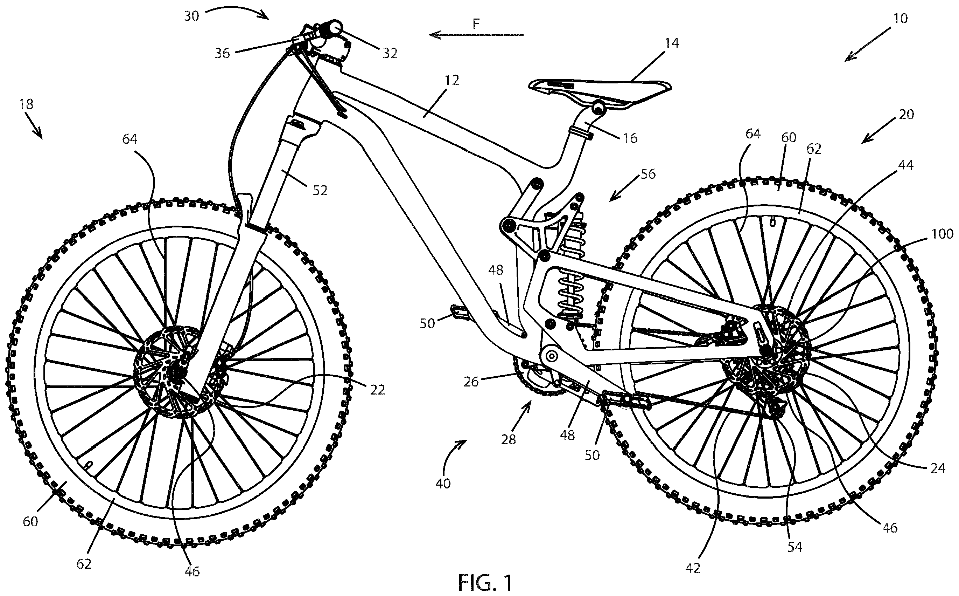

FIG. 1 generally illustrates a bicycle 10, which may be used to implement a speed sensing system 100 disclosed herein. The bicycle 10 may be an e-bike. Alternatively, the bicycle 10 may be a mountain bicycle. The bicycle 10 includes a frame 12, front and rear wheels 18, 20 rotatably attached to the frame 12, handlebars 32, and a drive train 40. The front wheel 18 of the bicycle is carried by a front fork 52 of the frame 12 supporting the front end of the frame 12. The rear wheel 20 supports the rear end of the frame 12. The bicycle 10 includes a rear suspension component 56. A front and/or forward riding direction or orientation of the bicycle 10 is indicated by the direction of the arrow F in FIG. 1. As such, a forward direction for the bicycle 10 is indicated by the direction of arrow F.

A front hydraulic disc brake 22 is provided for braking the front wheel 18 and a rear hydraulic disc brake 24 is provided for braking the rear wheel 20. The rear hydraulic disc brake 24 includes a caliper 23 and a rotor 25. The bicycle 10 also includes a seat or saddle 14 near a rear end of the frame 12 attached to a seat post 16 connected to the frame 12 for supporting a rider over a top of the frame 12.

The drive train 40 includes a chain ring 26 and a crank assembly 28 that is operatively coupled via a chain 42 and a rear derailleur 54 to a rear cassette 44 near a rotation axis of the rear wheel 20. The rear derailleur 54 and the rear cassette 44 are coaxially mounted to the rear wheel 20 via a hub (not shown). The crank assembly 28 includes two crank arms 48 and two pedals 50 connected to the two crank arms 48, respectively, on opposite sides of the frame 12 of the bicycle 10. In an embodiment, the drive train 40 may include more than one chain ring 26.

The rear cassette 44 may include a plurality (e.g., eleven) of coaxially mounted gears, cogs, or sprockets. Each sprocket also has teeth arranged around a respective circumference. The numbers of teeth on the rear sprockets may gradually decrease from the largest diameter rear sprocket to the smallest diameter sprocket. The rear derailleur 54 may be operable to move between different operating positions to switch the chain 42 to a selected one of the rear sprockets.

As can be seen in FIG. 1, the front and/or rear wheel 18, 20 of the bicycle 10 may include a tire 60, attached to a radially outer tire engaging portion of a rim 62. A plurality of spokes 64 are attached directly to the rim 62. Alternatively, the spokes 64 may be attached and/or secured to the rim 62 with other structural components. The spokes 64 extend from the rim 62 and attach to a central hub. The spokes 64 are maintained with a tension between the rim 62 and the hub to provide the wheel 18, 20 with an operational rigidity for use on the bicycle 10. The hub is configured for rotational attachment to the bicycle frame 12. Located on the hub between the rear hydraulic disc brake 24 and the frame 12 is a speed sensing system 100. The speed sensing system 100 is described in further detail below.

The rear derailleur 54 is depicted in these examples as a wireless, electrically actuated rear derailleur mounted or mountable to the frame 12, or frame attachment, of the bicycle 10. In the example shown, the rear derailleur 54 includes a power source (e.g., a battery) and a motor, and receives instructions (e.g., wirelessly) from a controller (e.g., a shifter or a central controller) mounted, for example, to the handlebar 32 or an interface of the present embodiments to shift gears on the rear cassette 44. In one embodiment, the rear derailleur 54 receives instructions from an e-bike control system 30 (e.g., including one or more processors, control circuitry, and/or a power source) to shift gears on the rear cassette 44. The rear derailleur 54 shifts gears using the power source and the motor of the rear derailleur 54, based on the received instructions.

In one embodiment, the rear derailleur 54 is powered by a power source outside of the rear derailleur 54. For example, the rear derailleur 54 is powered by the power source (e.g., a battery) of the e-bike control system 30. In another embodiment, the rear derailleur 54 is connected to an input on the handlebar 32 (e.g., a shifter), for example, via a shifter cable and shifts gears on the rear cassette 44 based on movement of the shifter (e.g., by the rider), and thus the shifter cable.

The handlebars 32 includes shift levers (or units) and brake levers to control the bicycle 10. The handlebar 32 include a brake lever (not shown) that is configured to operate the front hydraulic disc brake 22. The rear hydraulic disc brake 24 is operated by a brake lever 36 also located on the handlebars 32.

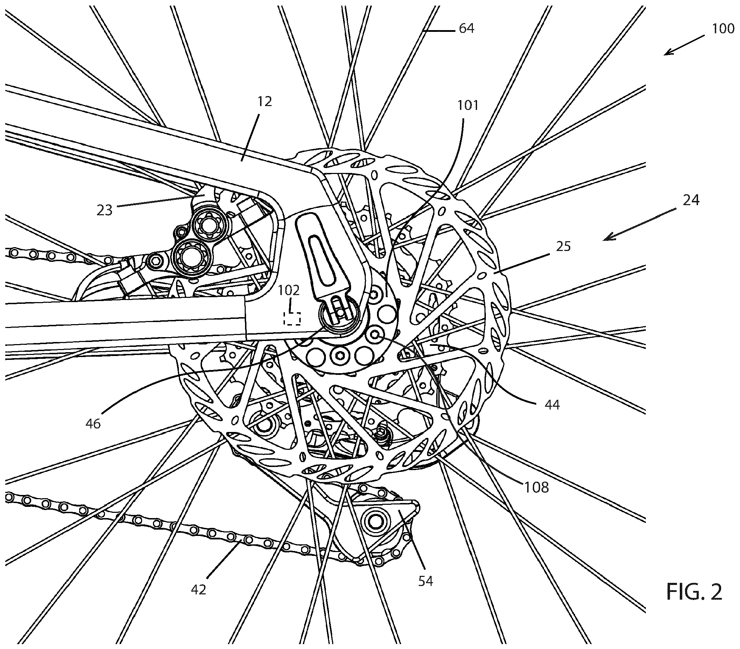

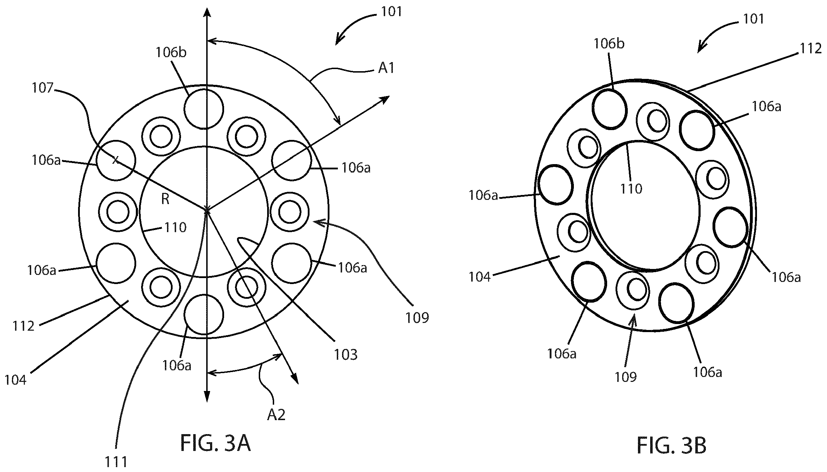

FIG. 2 is a partial side view of the rear wheel 20 of FIG. 1 including a first embodiment of the speed sensing system 100. In the first embodiment, the speed sensing system 100 includes a disc 101 located about the hub, sandwiched between the frame 12 and the rotor 25. The disc 101 includes a plurality of first sensed elements 106a and a single second sensed element 106b (See FIGS. 3A-3C). Alternatively, the disc may include any number of first sensed elements and any number of second sensed elements. In the embodiment, the first and second sensed elements 106a, 106b are magnets. Alternatively, the first and second sensed elements 106a,106b may be any device or structure capable of being sensed. In the embodiment, the first sensed elements 106a are circular magnets oriented such that a sensing device 102 detects a north pole. The sensed element 106b is a circular magnet oriented such that the sensing device 102 detects a south pole. Alternatively, the magnets may be any shape such as square, elliptical or the like.

The sensing device 102 is depicted in dashed lines on the frame 12. The dashed lines indicate the sensing device 102 would not be visible when looking at the assembled bicycle 10. The sensing device 102 is located on an exterior surface of the frame 12 facing the disc 101. In the present embodiment, the sensing device 102 includes a sensor (e.g., a Reed sensor or Hall effect sensor) located on the bicycle 10 (e.g., the frame 12).

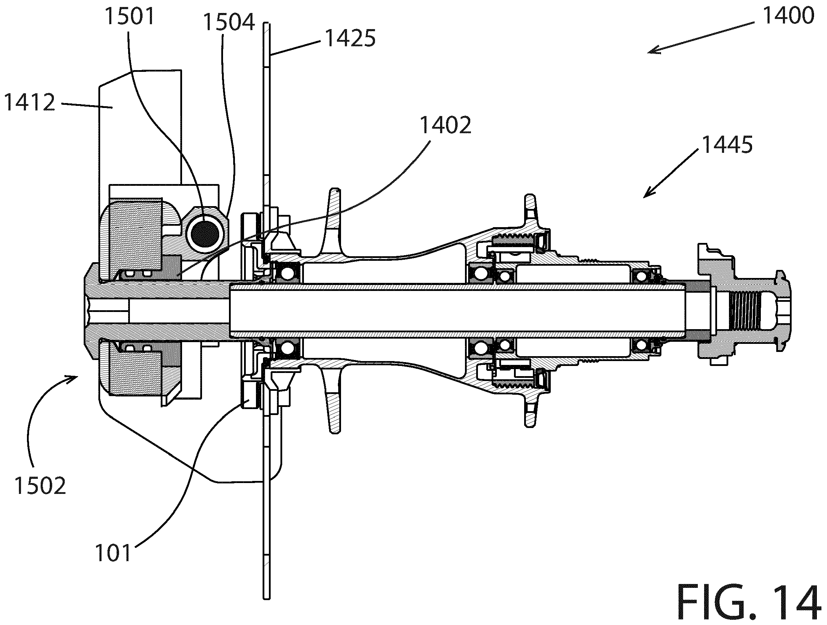

Alternatively, the sensing device 102 could be located anywhere on the bicycle capable of reading the first and second sensed elements 106a, 106b. For example, an alternate embodiment of an assembly 1400 of a sensing device may be seen in FIGS. 14-15C. In the example, a sensing device 1502 is shown oriented on a bicycle, such as bicycle 10 of FIG. 1, in relation to a hub 1445, a rotor 1425, and a bicycle frame 1412. As seen in FIG. 14, the sensing device 1502 includes a connection piece 1402 to attach the sensing device 1502 to the frame 1412. The connection piece 1402 may be combined with an O-ring for assembly with the seat stay of the bicycle 10. The connection piece 1402 and O-ring may be pushed into a hole of the seat stay or frame 1412, secured via a press-fit connection, and screwed in with the wheel.

The sensing device 1502 includes one or more sensors 1501 within a housing 1504. The one or more sensors 1501 sense sensed elements located on a disc, such as disc 101. The disc 101 is attached to the rotor 1425.

The connection piece 1402 may be made of any metal material. The connection piece 1402 may be made of aluminum. The housing 1504 may be made of any non-metal material. The housing 1504 may be made of plastic. The housing 1504 may be made of fiber-reinforced plastic. The housing 1504 and the connection piece 1402 may be joined using any technique. For example, the housing 1504 and the connection piece 1402 may be joined by over molding or adhesives. Additionally, the connection piece 1402 and/or the housing 1504 may include a knurling or groove that allows the two pieces to form-fit together.

In an alternate embodiment, the sensors 1501 may be attached to the housing 1504 rather than being positioned within the housing 1504. In a further alternate embodiment, the disc 101 may be placed adjacent to the rotor 1425 rather than being attached to the rotor 1425 and may be placed on either side of the rotor 1425.

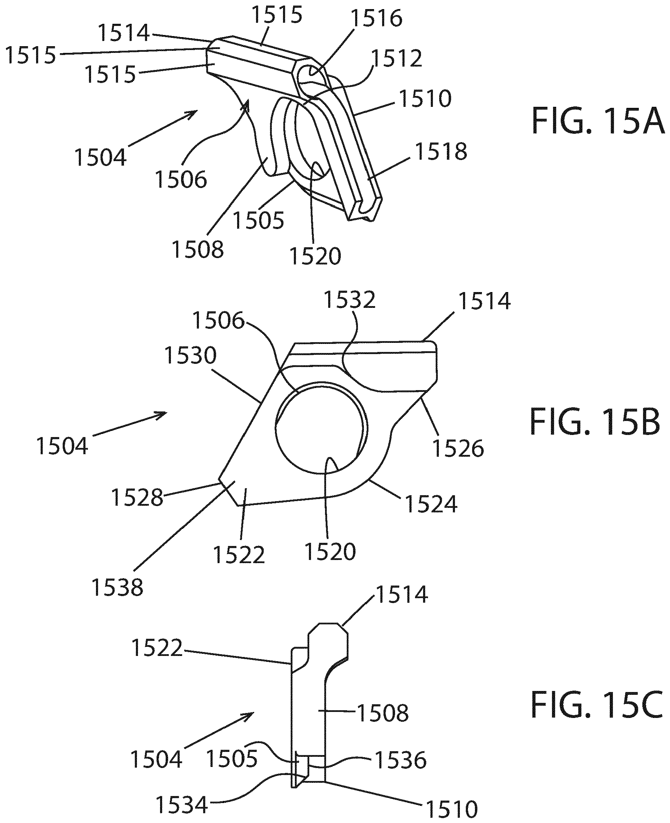

FIGS. 15A-15C depict perspective, rear, and side views of a housing 1504 of the example sensing device 1502 of FIG. 14A. As seen in FIGS. 15A-15C, the housing 1504 may include a recessed portion 1505 and a protruding portion 1506. The protruding portion 1506 may include a first leg 1508, a second leg 1510, a bridge 1512 connecting the first leg 1508 to the second leg 1510, and a sensor enclosure 1514. The first leg 1508 of the protruding portion 1506 may be widest where it meets the sensor enclosure 1514 while narrowing in width in a direction moving downward and away from the sensor enclosure 1514. The first leg 1508 may have a rounded end at its narrowest point. In an alternate embodiment, the first leg 1508 may be any shape.

The second leg 1510 is roughly the same rectangular shape and width from where it meets the bridge 1512 to its other end and has a flat edge. In an alternate embodiment, the second leg 1510 may be any shape. The bridge 1512 is a thin portion of the protruding portion 1506 underneath the sensor enclosure 1514 and above an axle opening 1520. The axle opening 1520 may be a circular opening. In an alternate embodiment, the axle opening 1520 may be any shape and the bridge 1512 may be any shape.

The sensor enclosure 1514 includes a sensor opening 1516. The sensor opening 1516 may be round or oval in shape. The outer surface of the sensor enclosure 1514 may be made up of a number of flat surfaces 1515. In an alternate embodiment, the sensor opening 1516 and the sensor enclosure 1514 may be any shape that fits the sensor being used. A cable recess 1518 may be included to route a wire or cable from a sensor, such as sensor 1501 in FIG. 14. The cable recess 1518 may be a U-shaped cavity on the top surface of the second leg 1510 of the protruding portion 1506. The cable recess 1518 may extend, as shown in FIG. 15A, into the sensor enclosure 1514. As seen in FIG. 15A, the cable recess 1518 may extend along part of or all of the bottom surface of the sensor enclosure 1514.

FIG. 15B shows a rear view of the housing 1504 of the sensing device 1502. A rear surface 1522 includes varyingly shaped edges. The rear surface 1522 includes a first edge 1524, a second edge 1530, a third edge 1532, and a fourth edge 1528. The first edge 1524, is long and mostly curved, non-uniform shape. The second edge 1530 is straight and angled, having a uniform and continuous shape. The second edge 1530 may be shorter than the first edge 1524. The third edge 1532 is curved in different directions, having a non-uniform shape. The third edge 1532 may be shorter than the first edge 1524. The fourth edge 1528 may be shorter than the first edge 1524, the second edge 1530, and the third edge 1532. The fourth edge 1528 may be straight and angled, having a uniform and continuous shape.

The first edge 1524 and the third edge 1532 meet to create a pointed end 1526. The first edge 1524 and the second edge 1530 do not meet, but instead are connected by the fourth edge 1528, creating a wide end 1538. The wide end 1538 is wider than the region created by the pointed end 1526. In an alternate embodiment, the rear surface 1522 and all of its edges and ends could be made in any shape.

FIG. 15C is a side view of the example housing 1504 of the sensing device 1502. As seen in FIG. 15C, the recessed portion 1505 may include a sloped edge 1534. The sloped edge 1534 may angle upwards from the rear surface 1522 towards a top surface 1536 of the recessed portion 1505.

Returning to the embodiment of FIG. 2, the sensing device 102 outputs a voltage corresponding to a magnetic field strength and direction of the first and sensed elements 106a, 106b. The sensing device 102 generates a first voltage or no voltage if there are no first or second sensed elements 106a or 106b in close proximity. The sensing device 102 generates a second voltage in the presence of a north pole (e.g., the first sensed elements 106a). The sensing device 102 generates a third voltage in the presence of a south pole (e.g., the second sensed element 106b).

The disc 101 includes a substrate 104 having annular shape. The substrate includes an outer circumference 112 and an inner circumference 110 defining a central opening 103. The inner circumference 110 is smaller than the outer circumference 112. The central opening 103 is configured to receive an axle 46 of the wheel 20 therethrough. In this embodiment, a center axis 111 of the central opening 103 is coaxial with the axle 46. The plurality of first sensed elements 106a and a second sensed element 106b are affixed to the disc 101. The first and second sensed elements 106a, 106b are equally spaced around the substrate 104 in the circumferential direction at a fixed radius R from the center axis 111 of the central opening 103 to a center axis 107 of the sensed elements 106a, 106b (see FIG. 3A). The first and second sensed elements 106a, 106b are placed on a single plane, orthogonal to the axle 46 of the wheel 20.

In the present embodiment, the first and second sensed elements 106a, 106b are mounted on the substrate 104 (See FIG. 3A). The sensed elements 106a, 106b may be deposited, glued, molded, mounted, soldered or printed onto the substrate in any known fashion. The disc 101 may be located between the frame 12 and the rotor 25 and fastened or bolted to the hub. Alternatively, the sensed elements may be mounted to or located on the spokes 64, wheel rim 62, the tire 60, the hub 45, or rotor 25 in any number of ways (e.g., bolting, screwing, clamping, gluing, etc.)

In the example embodiment, the first and second sensed elements 106a, 106b are positioned such that the magnetic field is parallel with the axle 46 of the wheel 20. The north pole of the first sensed elements 106a are oriented in the same direction as the north pole of all the other first sensed elements 106a. Only one second sensed element 106b is not oriented in the same direction as the other first sensed elements 106a. The different orientation of the second sensed element 106b is an example of a type of characteristic that may vary or differentiate the second sensed element 106b from the first sensed elements 106a.

The sensing device 102 is fixed to the bicycle frame 12 on a structural tube or dropout such that as the wheel 20 rotates the first and second sensed elements 106a, 106b pass within an effective sensing distance of the sensing device 102. For each revolution of the wheel 20, the sensing device 102 will generate a signal representing the sensing device passing over or in close proximity to each of the first and second sensed element 106a, 106b. The signal level for each of the first and second sensed element 106a, 106b will be the same except for the second sensed element 106b due to its reversed pole orientation. The period between the first and second sensed element 106a, 106b signal can be used as a high sampling rate wheel speed source. However, only the period between pulses for the uniquely oriented second sensed element 106b is used for the low rate, tamper proof signal source. These signals/voltages are transmitted to the e-bike control system 30, and the processors and algorithms within the e-bike control system 30 use this information to operate the bicycle 10. The e-bike control system, or other control system, may be located at the motor of the e-bike. In an embodiment, the signals may be analog signals read at the motor. In an alternate embodiment, the sensors may be wireless sensors with a battery/generator and/or microcontroller capable of communicating to the motor over controller area network ("CAN") bus.

FIGS. 3A-3C depict front and perspective views of the disc 101 of FIG. 2. As seen in FIGS. 3A-3C, the disc 101 is comprised of the substrate 104. The substrate 104 has a thickness, and the substrate 104 may be flexible or rigid. The substrate 104 may be any substance operable to form the underlying attachment of the first and second sensed elements 106a, 106b. For example, silicon, silicon dioxide, aluminum oxide, anodized aluminum, sapphire, germanium, gallium arsenide ("GaAs"), an alloy of silicon and germanium, or indium phosphide ("InP"), may be used for the substrate 104.

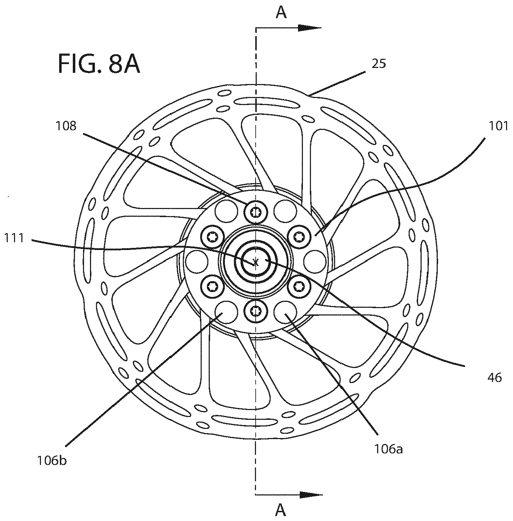

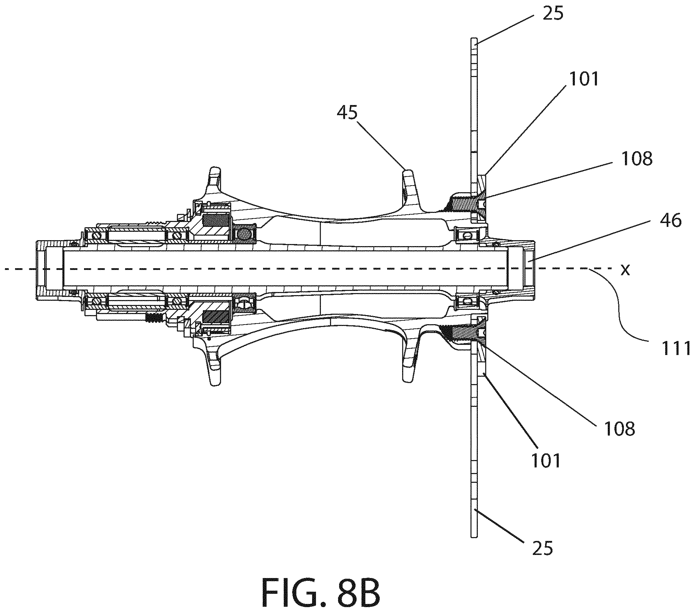

Further, the disc 101 includes a plurality of (e.g., six) holes 109, in this embodiment countersunk holes, for receiving a plurality of fasteners 108, the plurality of first sensed elements 106a (e.g., five) and the one second sensed element 106b. The fasteners 108 may be any type of fastener, such as screws or bolts. The fasteners 108 are used to attach the disc 101 to the hub, as seen in FIGS. 8A and 8B. In an alternate example, there may be more or less fasteners 108/holes 109, more or less first sensed elements 106a and/or more second sensed elements.

In FIGS. 8A and 8B, the fasteners 108 are machine screws that secure the disc 101 to the hub 45. As seen in FIG. 8B, a cross section taken along line A-A of FIG. 8A, the screws 108 will go through holes 109 in the disc 101 and through the rotor 25 or through holes in the rotor 25, to be secured to the hub 45. The disc 101 is configured to sit on the outboard side of the rotor 25.

As seen in FIG. 3A, a first angle A1 is provided about the center axis 111 of the central opening 103 and between the center axes 107 of any two adjacent sensed elements. For example, the first angle A1 in FIG. 3A is the angle between the second sensed element 106b and the first sensed elements 106a directly adjacent to it in the clockwise direction. In this embodiment, all the sensed elements (e.g., 106a and 106b) are equally spaced around the substrate 104. Thus, the first angle A1 in the present embodiment is the same angle between any two adjacent sensed elements 106a, 106b. In the example, the first angle A1 would be 60°. However, the first angle A1 may vary depending on the number of sensed elements 106a, 106b. A second angle A2 is provided about the center axis 111 and between any of the centers of the holes 109, or fasteners 108 when assembled, and the center axis 107 of any adjacent first or second sensed element 106a, 106b. The fasteners 108 and holes 109 are equally spaced/distributed around the substrate 104 and between the sensed elements 106a, 106b. Thus, the second angle A2 between a fastener/hole and a sensed elements 106a, 106b is constant. In FIG. 3A, the second angle A2 is 30°. However, the second angle A2 may vary depending on the number of fasteners 108/holes 109 and sensed elements 106a, 106b. In the example, first angle A1 is greater than second angle A2.

In an alternate example, all the sensed elements (e.g., 106a and 106b) may not be equally spaced around the substrate 104. In an alternate example, the fasteners 108/holes 109 may not be spaced equally around the substrate 104.

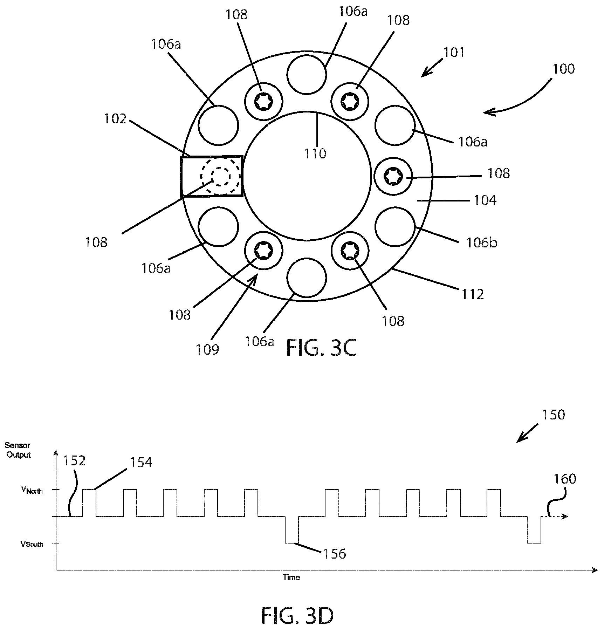

FIG. 3C depicts how the sensing device 102 overlaps a portion of the disc 101 when the system 100 is in use on a bicycle, such as the bicycle 10. FIG. 3D is a graph 150 showing the output signal 160 of the sensing device 102 over time, as seen in FIC. 3C. The sensing device 102 detects the characteristic, and, in response, the sensing device 102 generates an output signal 160 corresponding to the characteristic.

In the present example of FIG. 3C, the sensing device 102 is overlapping, but not touching, a fastener 108 (indicated by the dashed lines of the fastener 108). In the present figure, the overlap of the sensing device 102 with the fastener 108 depicts that the sensing device 102 is not detecting the first or second sensed elements 106a, 106b. Thus, translates to the graph 150 as a flat portion 152 of the output signal 160. Therefore, in the present embodiment, no signal/voltage is being produced by the sensing device 102 as a fastener 108 passes nearby it. As the wheel 20 of the bicycle 10 rotates, the disc 101 will also rotate, and the first sensed element 106a will pass nearby/under the sensing device 102. When the sensing device 102 is sensing/detecting one of the first sensed elements 106a (e.g., detects a north pole), the sensing device 102 produces a signal/voltage that correlates to the peaks 154 of the output signal 160 on the graph 150. When the sensing device 102 is sensing/detecting the second sensed element 106b (e.g., detects a south pole), the sensing device 102 produces a signal/voltage that correlates to the valley 156 of the output signal 160 of the graph 150. In the present embodiment, as the first and second sensed elements 106a, 106b are magnets, the peaks 154 are a voltages emitted (V_{North}) when a north pole is encountered by the sensing device 102, and the valleys 156 are voltages (V_{South}) emitted when a south pole is encountered by the sensing device 102.

The bicycle 10 may include a computer or microprocessor located on the bicycle 10, such as, for example in bike control system 30, that analyzes the signals/voltages produced by the speed sensing system 100. The bicycle computer/microprocessor may be programmed to take an action, for example, cease motor assistance to the rider of the bicycle 10 if the sensing device 102 does not detect the valleys 156 (V_{South}). This may indicate that a rider has tampered with the speed sensing system 100 or that the speed sensing system 100 is not operating correctly. The tampering may be in the form of removing the second sensed element 106b, removing the entire disc 101, or removing the appropriate sensor.

In an alternate example, the computer/microprocessor may be programmed to take an action, for example, generate an error message to display on an e-bike display, if the south poles (valleys 156 (V_{South})) are encountered by the sensing device 102 too far apart in time. This may indicate to the computer/microprocessor that the that a rider has tampered with the speed sensing system 100 in an alternate manner or that the speed sensing system 100 is not operating correctly.

In this way, the varied characteristic of the second sensed element 106b is used by the bicycle 10 to determine if the speed sensing system 100 has been tampered with.

In an alternate embodiment, the computer/microprocessor may be located on the rider rather than on the bicycle 10.

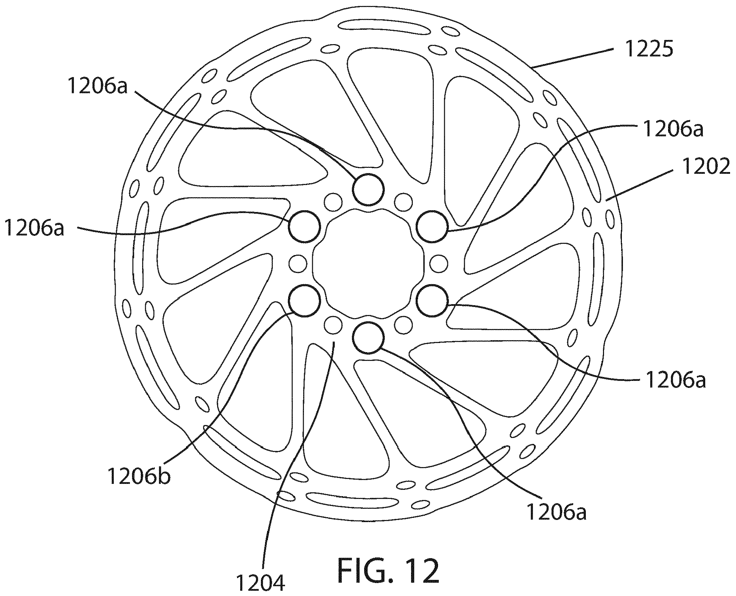

As seen in FIG. 12, in an alternate embodiment, first and second sensed elements 1206a, 1206b may be attached to the rotor 1225. The rotor 1225 has an outer portion 1202 and an inner portion 1204, and the first and second sensed elements 1206a and 1206b are secured to the inner portion 1204 of the rotor 1225. As in the embodiment of FIG. 2, the first and second sensed elements 1206a and 1206b are magnets, the sensed element 1206b having a different polarity than the sensed elements 1206a.

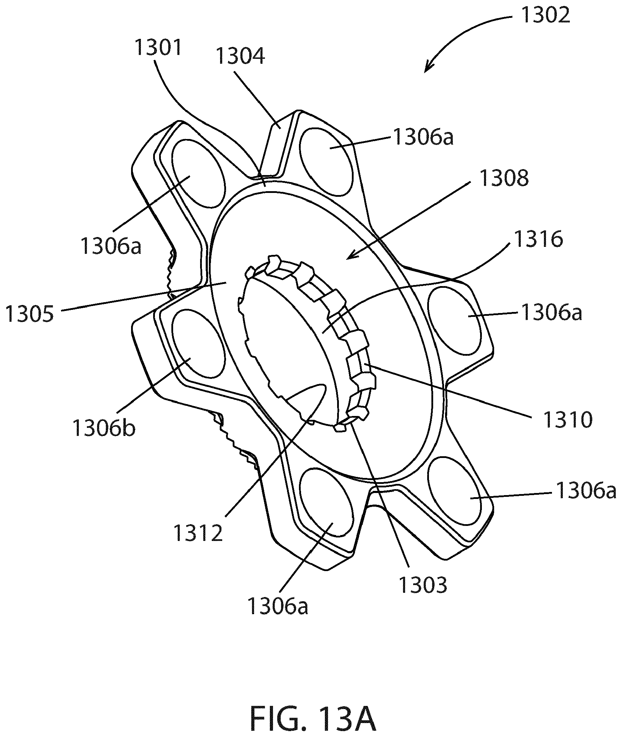

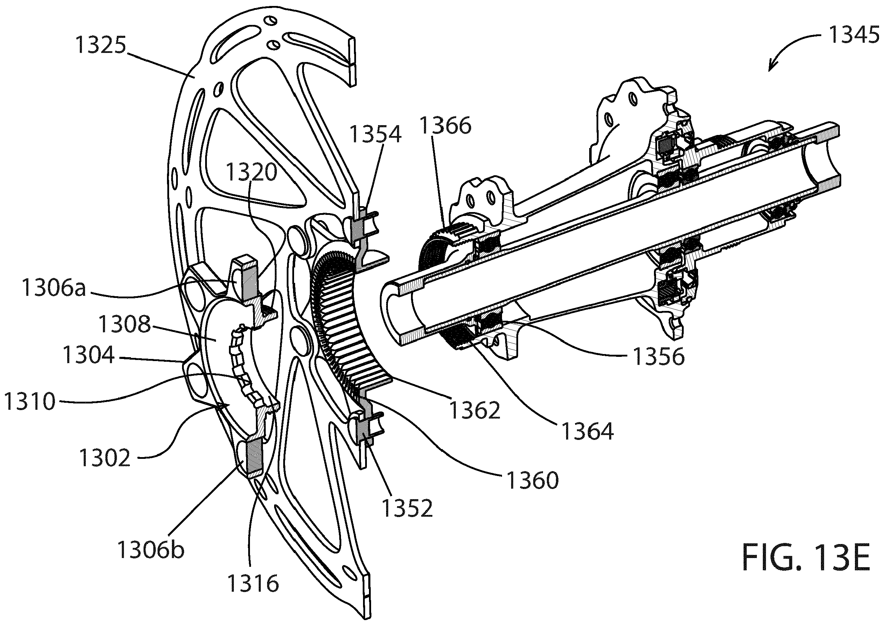

As seen in FIGS. 13A-13E, in an alternate embodiment, first and second sensed elements 1306a and 1306b may be attached to an axial securing device, such as a lockring 1302, for use with a brake rotor 1325 having a center lock. The lockring 1302 in the example embodiment includes a center portion 1308 that includes an outer circumference 1301 and an inner circumference 1303. Further, the center portion 1308 may include a smooth top portion 1305 and a bottom portion that includes a knurled surface 1322.

In this embodiment, the center portion 1308 may be flat or may be angled downwards from the outer circumference 1301 towards the inner circumference 1303. The inner circumference 1303 surrounds a center recess 1312. The inner circumference 1303 may include a center rearward protrusion 1316 and tool interaction features, such as notches 1310. The center rearward protrusion may include a smooth inner surface 1318 and a threaded outer surface 1320. In the example, the threaded outer surface 1320 includes male threads. The threaded outer surface 1320 is configured to threadably engage the hub 1345. In an alternate example, radially between the threaded outer surface 1320 of the center rearward protrusion 1316 and the knurled surface 1322 a protective device may be included to protect the knurled surface 1322. The protective device may be a washer. The washer may be replaceable. The washer may be of any size, shape, or made of any material. Specifically, the washer may be made of a metal material, such as steel. The washer may be made of stainless steel.

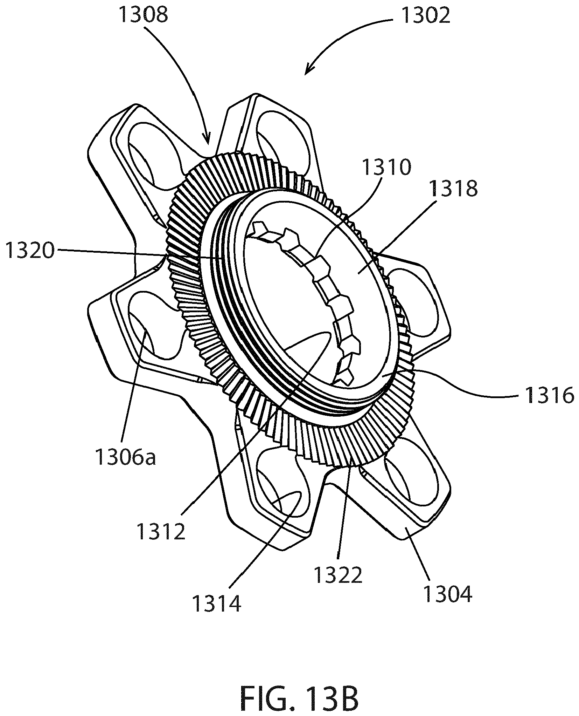

In this example, the lockring 1302 includes an extension region configured to accommodate the sensed elements. As shown, the extension region may include projections 1304 along the outer edge 1301 of the center portion 1308. The projections 1304 are depicted in FIGS. 13A-13C as rectangular in nature, having a wider base and narrower tip. However, the projections 1304 may be any shape or size. In the embodiment, there are six projections shown. In an alternate embodiment, there may be any number of projections corresponding to any number of sensed elements. In the example, each projection 1304 includes at least one of a first sensed element 1306a and a second sensed element 1306b. The first and second sensed elements 1306a and 1306b are shown as configured to fit in a portion of a hole 1314 (See FIG. 13B). However, the first and second sensed elements 1306a and 1306b may be any shape or size and therefore may take up all or part of the holes 1314. The holes 1314 are shown in the example as circular in shape, however, the holes may be any size or shape to accommodate the size and shape of the first and second sensed elements 1306a and 1306b.

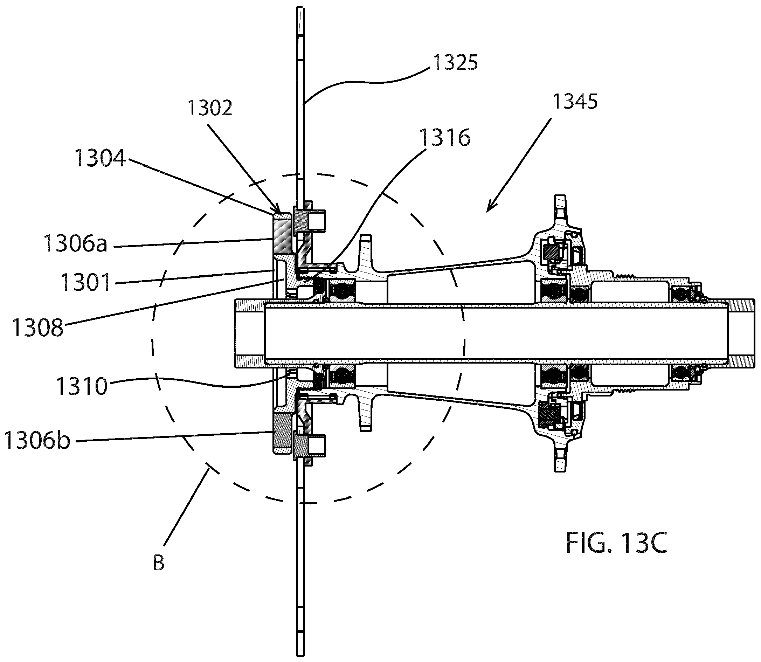

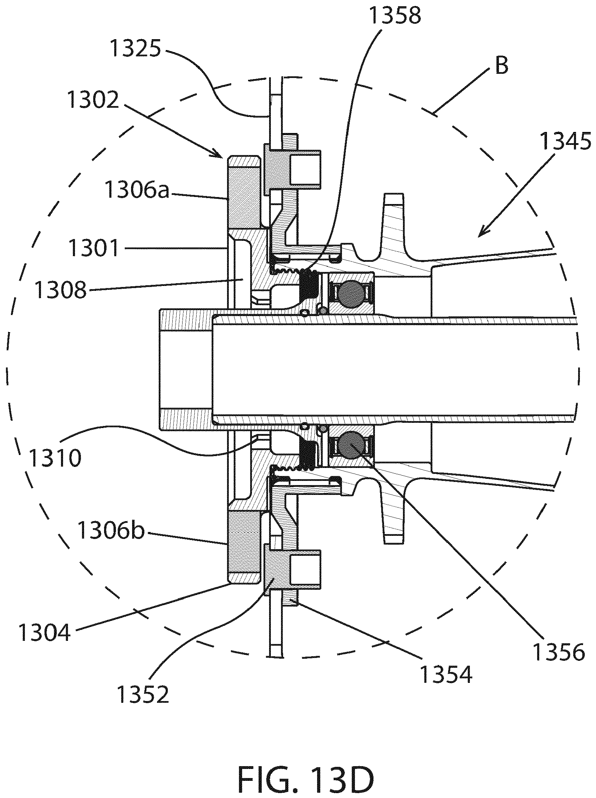

FIGS. 13C-13E are cross-sections of an assembly having the lockring 1302, the hub 1345, and the rotor 1325. FIG. 13C includes a call out that is presented as FIG. 13D in an enlarged form. As seen in the FIGS. 13C-13E, when assembled, the rotor 1325 is seated between the hub 1345 and the lockring 1302. The rotor includes a carrier 1354 that carries the rotor 1325. The carrier 1354 and the rotor 1325 are connected together via fasteners 1352. The fasteners may be rivets, bolts or screws. The carrier 1354 includes a knurled portion 1360 and splines 1362. The hub 1345 includes a threaded portion 1364 and splines 1366. In the example, the threaded portion 1364 of the hub 1345 includes female threads. Further, the hub 1345 includes bearings 1356. The threaded outer surface 1320 of the lockring 1302 engage with a threaded portion 1364 of the hub 1345 at a lockring-hub interface 1358. In the example, the lockring 1302 includes male threads and the hub 1345 includes female threads, however, in an alternate example the threading may be reversed. The knurled surface 1322 of the lockring 1302 meshes with the knurled portion 1360 of the carrier 1354. Further, the splines 1362 of the carrier engage the splines 1366 of the hub 1345. In this configuration, the lockring 1302, the rotor 1325 and the hub 1345 are securely connected together.

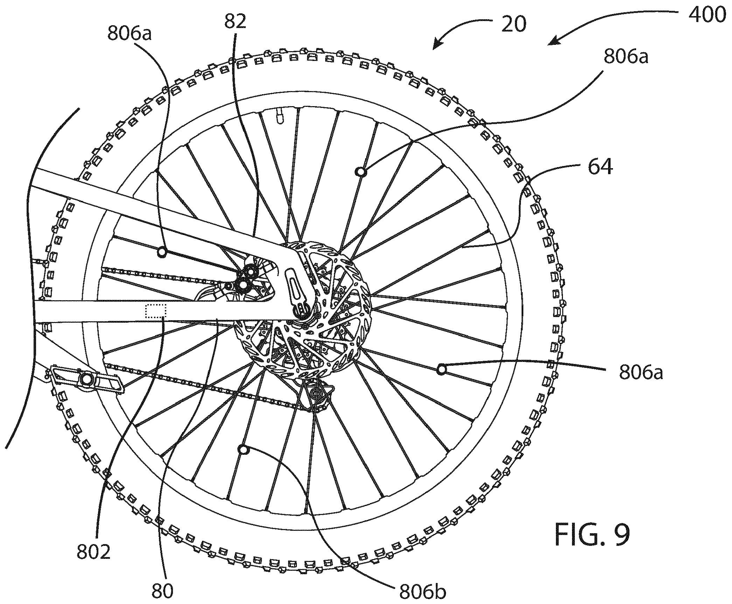

As seen in FIG. 9, in another alternate embodiment, first and second sensed elements 806a and 806b are mounted to and located on the spokes 64 of the wheel 20. In the example, the sensed elements 806a and 806b are also magnets, the sensed element 806b having a different polarity than the sensed elements 806a. In the example, there are three first sensed elements 806a and one second sensed element 806b. In the example speed sensing device 400 of FIG. 9, a sensing device 802 may be positioned on the chain stay 80 of the frame 52. Alternatively, the sensing device 802 may be mounted or secured onto the seat stay 82 of the frame 52. The sensing device 802 may include one or more sensors. In the example, the sensing device 802 is positioned on the chain stay 80 in a location where the first and second sensed elements 806a, 806b will pass nearby or directly underneath it.

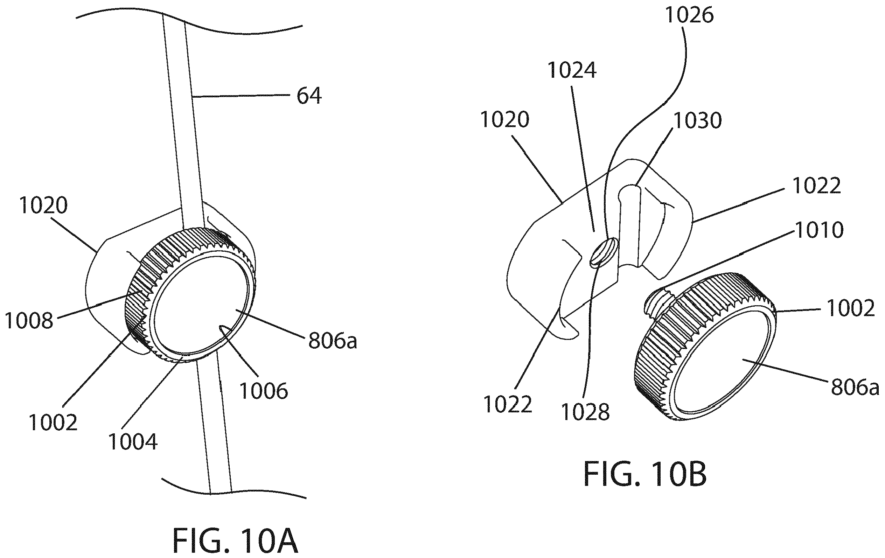

FIGS. 10A and 10B are perspective views of a configuration allowing the first sensed element 806a, or the second sensed element 806b, to be attached to a wheel spoke 64 of the example speed sensing system 400 of FIG. 9. The first sensed element 806a may be secured in a housing 1002. The housing 1002 includes an opening 1006. The first sensed element sits recessed within the opening 1006. The housing 1002 may include a lip 1004 that extends slightly radially inward to keep the first sensed element 806a within the housing 1002. However, the lip 1004 is optional, and the first sensed element 806a may be secured to the housing 1002 with or without lip 1004 in any number of ways, such as with fasteners, gluing or soldering. The housing 1002 optionally includes grooves or ridges 1008 around the circumference of the housing 1002. The ridges 1008 may be useful for gripping/holding the housing 1002 and/or may be helpful for securing the housing 1002 to a holder 1020. The housing 1002 and the holder 1020 may be made of any suitable material, including plastic, rubber, metal (e.g., aluminum), etc. Further, the housing 1002 and the holder 1020 may be made of the same material or different materials. The housing 1002 further includes a threaded insert 1010 protruding from the back of housing 1002 that is received within a central hole 1026 in the holder 1020. The central hole 1026 includes threads 1028 to threadably engage with the threaded insert 1010.

The holder 1020 includes a recess 1030 designed to match the size of the spokes 64. As seen in FIG. 10A, when attached to a spoke 64, the spoke will tightly fit within the recess 1030, allowing the holder 1020 to remain in place on the spoke 64. The holder 1020 further includes two flanges 1022 and a central recess 1024 between the flanges 1022. The housing 1002 of the first sensed element 806a sits within the central recess 1024. The flanges 1022 at least partially surround and contact the ridges 1008, holding the housing 1002 in place. Although in FIGS. 10A and 10B the first sensed element 806a is depicted, the second sensed element 806b may be attached to the spokes 64 in the manner depicted.

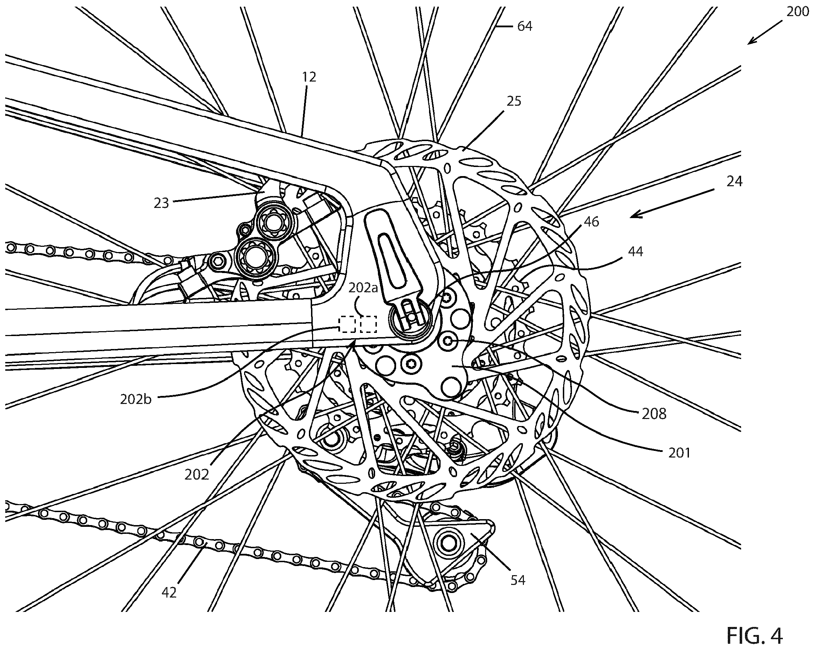

FIG. 4 is a partial view of the rear wheel 20 of FIG. 1 including a second embodiment of a speed sensing system 200. In the second embodiment, the speed sensing system 200 includes a disc 201 located about the hub, sandwiched between the frame 12 and the rotor 25. The frame 12 includes a sensing device 202 comprising a first sensor 202a and a second sensor 202b. Both the first sensor 202a and the second sensor 202b are adjacent to each other horizontally, and may be the same type of sensor. Alternatively, the first sensor 202a and the second sensor 202b may be different types of sensors.

The first and the second sensors 202a, 202b are depicted in dashed lines on the frame 12. The dashed lines indicate the first and second sensors 202a, 202b are located on an exterior surface of the frame 12 facing the disc 201, and thus would not be seen when looking at the assembled bicycle 10. In the present embodiment, the first and second sensors 202a, 202b may be, for example, a Reed sensor or Hall effect sensor located on the bicycle 10 (e.g., the frame 12).

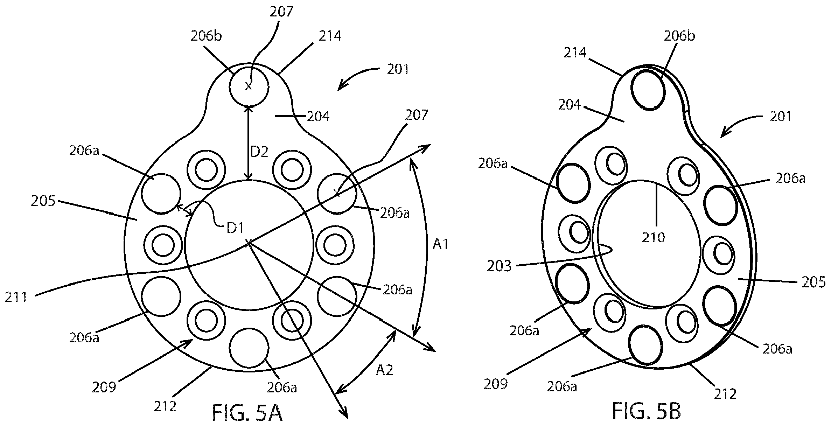

The disc 201 includes a substrate 204 having an annular portion 205 and a protrusion 214 extending radially outwardly from an outer circumference 212 of the annular portion 205. The annular portion 205 includes inner circumference 210 defining a central opening 203 configured to receive the axle 46 therethrough. The central opening 203 has a center axis 211, which may be coaxial with the axle 46. A plurality of first sensed elements 206a are disposed about the annular portion 205 in the circumference direction and a single second sensed element 206b is disposed on the protrusion 214 (See FIGS. 5A-5D). In the present embodiment, the first and second sensed elements 206a, 206b are magnets. However, unlike the first embodiment, in the present embodiment both the first sensed elements 206a and the second sensed elements 206b may be magnets oriented with the same polarity. For example, the first and second sensed elements 206a, 206b are oriented such that the first and second sensors 202a, 202b detect only north poles. In an alternate embodiment, the first and second sensed elements 206a, 206b may be oriented with the opposite polarity or different polarities.

In the present embodiment, the first and second sensors 202a, 202b output a voltage corresponding to a magnetic field strength and direction. The first and second sensors 202a, 202b generates a first voltage or no voltage if there are not any first or second sensed elements 206a or 206b in close proximity. The first and second sensors 202a, 202b generate a second voltage in the presence of the north pole (e.g., the first and second sensed elements 206a, 206b).

FIGS. 5A-5B depict front and perspective views of the disc 201 of FIG. 4. As seen in FIGS. 5A-5B, the disc 201 is comprised of the substrate 204. The substrate 204 has a thickness, and the substrate 204 may be flexible or rigid. The substrate 204 may be any substance operable to form the underlying attachment of the first and second sensed elements 206a, 206b.

Further, the disc 201 includes a plurality of (e.g., six) holes 209 for receiving a plurality of fasteners 208 for attaching the disc 201 to the hub, the plurality of first sensed elements 206a (e.g., five) and the one second sensed element 206b. In an alternate example, there may be more or less holes 209/fasteners 208, more or less first sensed elements 206a and/or more second sensed elements. The first and second angles A1 and A2 provided in the first embodiment apply to the present embodiment. The first angle A1 is the angle provided about the center axis 211 of the central opening 203 and between the center axis 207 of any two adjacent sensed elements. The second angle A2 is the angle provided about the center axis 211 and between the center axis 207 of any one of the sensed elements 206a, 206b and any of the centers of an adjacent hole 209 or fastener 208.

As seen in FIG. 5A, the first sensed element 206a is placed a first distance D1 from the inner circumference 210. The first distance D1 is measured between the inner circumference 210 and the edge of the first sensed element 206a closest to the inner circumference 210. The second sensed element 206b is placed a second distance D2 from the inner circumference 210. The second distance D2 is measured between the inner circumference 210 and the edge of the second sensed element 206b closest to the inner circumference 210. The second distance D2 is greater than the first distance D1. The second sensed element 206b is capable of being placed a second distance from inner circumference 210 due to the protrusion 214. Thus, the first sensed elements 206a are placed on a first radius R1, with the second sensed element 206b being placed on a second radius R2. Directly under the second sensed element 206b along the inner or first radius R1, between two fasteners 208a, is an empty space merely comprised of the substrate 204. The different radii (and/or the different distances D2 and D1) of the second sensed element 206b and the first sensed elements 206a is an example of a type of characteristic that may vary or differentiate the second sensed element 206b from the first sensed elements 206a.

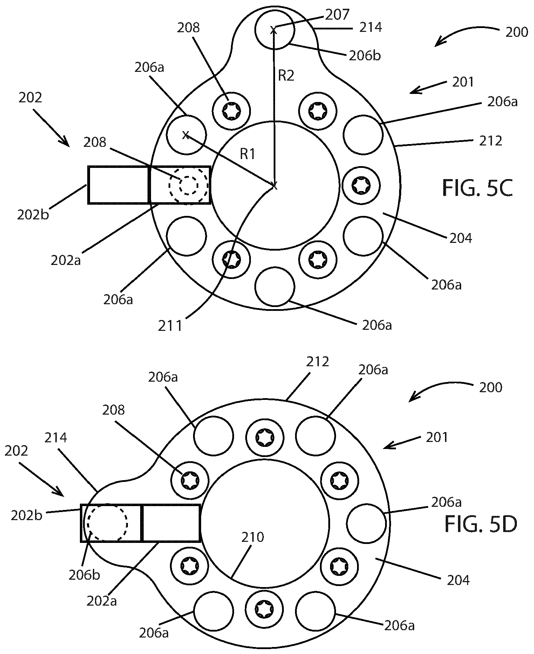

FIGS. 5C-5D depict how the two sensors in the present embodiment, the first sensor 202a and the second sensor 202b, overlap a portion of the disc 201 when the system 200 is in use on a bicycle, such as bicycle 10. The first sensor 202a is closer to the hub of the rear wheel 20 than the second sensor 202b. Therefore, the first sensor 202a is oriented to detect magnets placed on the first radius R1 (e.g., the first sensed elements 206a), and the second sensor 202b is oriented to detect magnets placed along the second (outer) radius R2 (e.g., the second sensed element 206b).

In FIG. 5C, the first sensor 202a is overlapping, but not touching, a fastener 208 (indicated by the dashed lines of the fastener 208). FIG. 5D shows the second sensed element 206b in a dashed line, indicating the second sensor 202b is overlapping, but not touching, the second sensed element 206b.

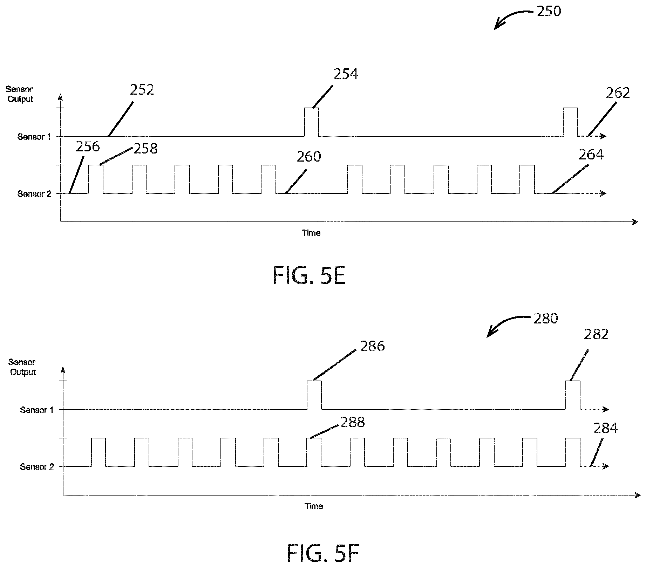

FIG. 5E is a graph 250 showing a sensor 1 output signal 262 (e.g., the second sensor 202b) and a sensor 2 output signal 264 (e.g., the first sensor 202a) over time, as seen in FIGS. 5C and 5D. The sensing device 202 detects the characteristic, the sensing device 202 generates an output signal 262 corresponding to the characteristic. As seen in FIG. 5E, the sensor 1 output signal 262 is generally flat, having a sensor 1 flat portion 252 encompassing most of the sensor 1 output signal 262. Referencing FIG. 5C, this is because the second sensor 202b does not have anything to sense for most of the rotation of the wheel 20 and disc 201. As seen in FIGS. 5D and 5E, a sensor 1 peak 254 occurs in the sensor 1 output signal 262 when the second sensor 202b senses/detects the second sensed element 206b as it passes the second sensor 202b.

In the example, graph 250 shows a sensor 2 output signal 264 (e.g., the first sensor 202a) over time. The sensor 2 output signal 264 includes a sensor 2 flat portion 256 when no first sensed element 206a is detected, and instead a fastener, such as fastener 208 is passing under the first sensing device 202a. The sensor 2 output signal 264 includes a sensor 2 peak 258 when the first sensor 202a detects a first sensed element 206a. The sensor 2 output signal 264 includes a longer flat portion 260 representing the time between sensing two first sensed elements 206a when there is a second sensed element 206b between the two first sensed elements 206a. Thus, the longer flat portion 260 of sensor 2 output signal 264 correlates with a sensor 1 peak 254 in the sensor 1 output signal 262.

The time period of both the first and second sensors 202a, 202b is used as a high rate wheel speed source. Only the period of the second sensor 202b corresponding to the second sensed element 206b (the single magnet on the outer radius) is used for the low rate, tamper proof signal source. The computer or microprocessor located on the bicycle 10 analyzes the sensor 1 output signal 262 to determine if tampering has occurred, similar in manner to the description above. The sensor 2 output signal 264 alone or in combination with the sensor 1 output signal 262 may be used as a high-sampling rate wheel speed source. In an alternate embodiment, the longer flat portion 260 of the sensor 2 output signal 264 may be used to determine if tampering has occurred. In this way, the varied characteristic of different radius of the second sensed element 206b is used by the bicycle 10 to determine if the speed sensing system 100 has been tampered with.

FIG. 5F is an alternate embodiment, having a graph 280. In this alternate embodiment, the primary difference is that the disc 201 would include one additional first sensed element 206a. If evenly spaced from the other first sensed elements 206a, that additional first sensed element 206a would be placed a first distance (D1) from the inner circumference 210 of the disc 201 (e.g., along the first/inner radius), but the additional first sensed element 206a would be located under the second sensed element 206b. Thus, the first sensing device 202a would sense the additional first sensed element 206a simultaneously when the second sensing device 202b senses the second sensed element 206b. As in the example of FIG. 5A, the different radii of the second sensed element 206b and the first sensed elements 206a is an example of a type of characteristic that may vary or differentiate the second sensed element 206b from the first sensed elements 206a.

The graph 280 shows a sensor 1 output 282 (e.g., the second sensor 202b) and a sensor 2 output signal 284 (e.g., the first sensor 202a) over time. The only difference from graph 250 is that instead of having a longer flat portion, such as the longer flat portion 260 of graph 250, the sensor 2 output signal 284 includes a sensor 2 peak 288 (e.g., when the first sensor 202a senses the additional first sensed element 206a) at the same time that the sensor 1 output signal 282 includes a sensor 1 peak 286 (e.g., when the second sensor 202b senses the second sensed element 206b).

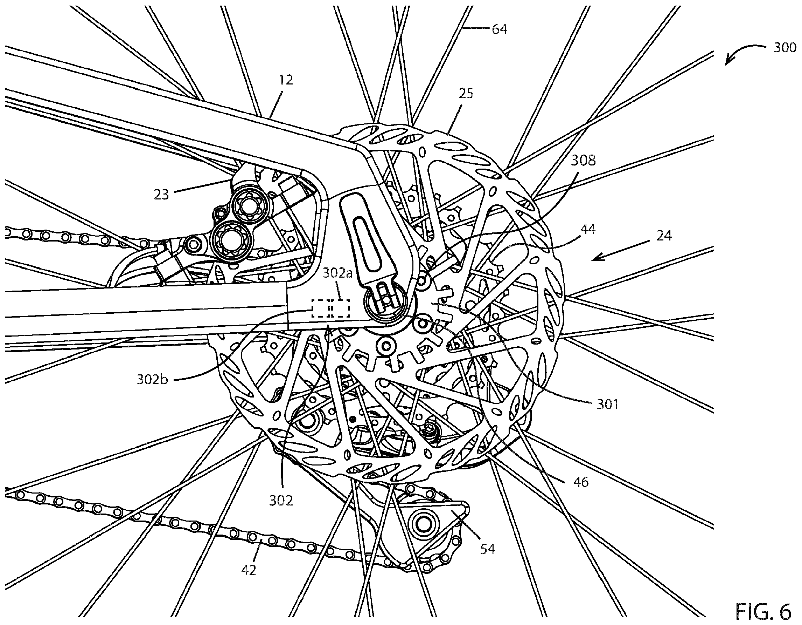

FIG. 6 is a partial view of the rear wheel 20 of FIG. 1 including a third embodiment of the speed sensing system 300. In the third embodiment, the speed sensing system 300 includes a disc 301 located about the hub, sandwiched between the frame 12 and the rotor 25. The frame 12 includes a sensing device 302 comprising a first sensor 302a and a second sensor 302b. Both the first sensor 302a and the second sensor 302b are adjacent to each other horizontally and may be the same type of sensors. Alternatively, the first sensor 302a and the second sensor 302b may be different types of sensors.

The first and second sensors 302a, 302b are depicted in dashed lines on the frame 12. The dashed lines indicate the first and second sensors 302a, 302b are on an exterior surface of the frame 12 facing the disc 101, and thus would not be seen when looking at the assembled bicycle 10. In an alternate embodiment, the first and second sensors 302a, 302b or portions of the first and second sensors 302a, 302b are seen from the outside of the assembled bicycle 10, or around the frame 12.

In the present embodiment, the first and second sensors 302a, 302b are sensors such as proximity sensors or optical sensors such as inductive proximity sensors, capacitive proximity sensors, optical reflectivity sensors, optical interruption sensors, or sensors of a similar type. In this embodiment, the disc 301 is an encoding wheel 304 made of the appropriate material for the type of sensor technology used.

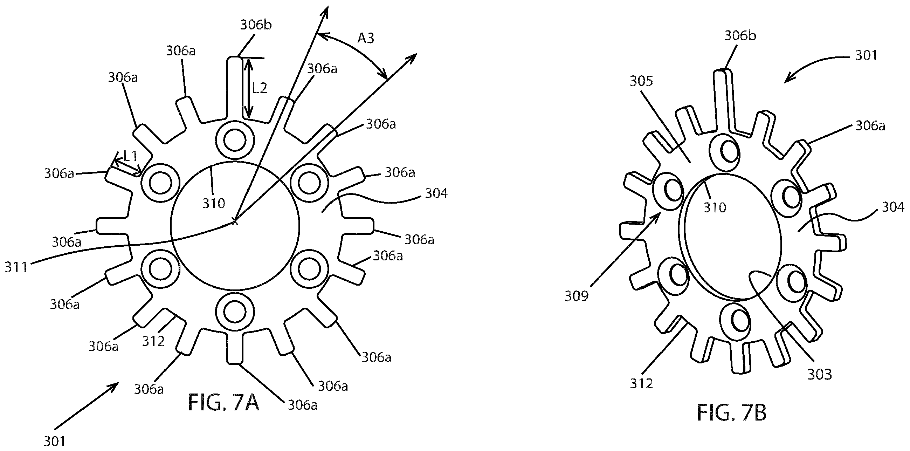

As seen in FIGS. 7A and 7B, the encoding wheel 304 includes an annular portion 305 having an inner circumference 310 defining a central opening 303 and an outer circumference 312. The central opening 303 is configured to receive the axle 46 of the wheel 20 therethrough. The central opening 303 has a central axis 311, which may be coaxial with the axle 46. The encoding wheel 304 also includes fasteners 308 and holes 309.

Along the outer circumference 312 of the annular portion 305 are a plurality of equally spaced features, such as first sensed elements 306a and a single second sensed element 306b. The first sensed element 306a and the second sense element 306b are rectangular protrusions extending radially outward from the annular portion 305 of the encoding wheel 304. In the present embodiment, the first sensed elements 306a have a first length L1 and the second sensed element 306b has a second length L2, which is longer/larger than the first length L1 of the first sensed elements 306a. Thus, the first sensed elements 306a are placed on a third radius R3 from the center axis 311 of the central opening 303 to the tip of the first sensed element 306a, with the second sensed element 306b being placed on a fourth radius R4 from the center axis 311 of the central opening 303 to the tip of the second sensed element 306b. In an alternate embodiment, a second sensed element could vary from a first sensed element in a variety of ways, such as: size, shape, color, material composition, reflectors, emitters, and/or an additional layer of material on top of a portion of the encoding wheel. The different length/size of the second sensed element 306b than the first sensed element 306a is an example of a type of characteristic that may vary or differentiate the second sensed element 306b from the first sensed elements 306a.

In an alternate embodiment, the first sensed element and the second sense element may be integrated directly with or into a brake rotor, such as rotor 25. The sensors may be located on the bicycle and configured to detect the first and second sensed elements if placed directly onto the rotor 25. For example, the rotor may have magnets attached thereto, or markings indicated thereon, providing for the first sense element and the second sense element with a differing characteristic.

In the present embodiment, there are sixteen first and second sensed elements 306a, 306b. Thus, a third angle A3 that is provided about the center axis 311 of the central opening 303 and between radial centerlines of any two adjacent sensed elements 306a, 306b is less than the first angle A1 of the first and second embodiments. For example, in the third embodiment, the angle A3 may be 22.5° as all sensed elements 306a, 306b are equally spaced apart. The fasteners 308 and holes 309 are equally spaced/distributed around the encoding wheel 304, but there are not enough holes/fasteners to be evenly distributed between the sensed element 306a, 306b. Alternatively, the encoding wheel may include any number of first sensed elements and any number of second sensed elements.

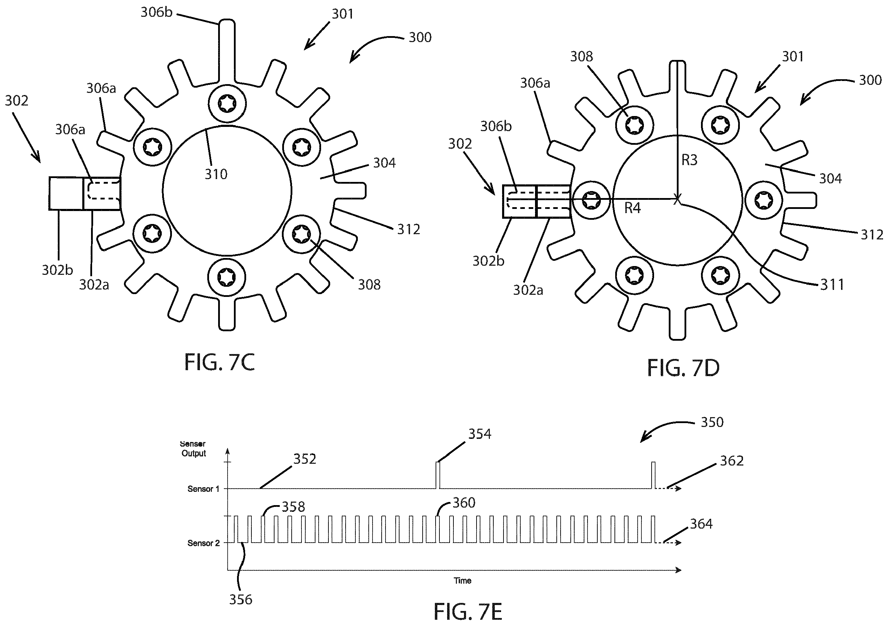

In FIG. 7C, the first sensor 302a is overlapping, but not touching, a first sensed element 306a. The first sensed element 306a is indicated in dashed lines to indicate it is under/behind the first sensor 302a. FIG. 7D, the second sensed element 306b is shown as a dashed line, indicating the first sensor 302a and the second sensor 302b are overlapping, but not touching, the second sensed element 306b.

As seen in FIGS. 7C and 7D, the first sensed elements 306a are detectable by the first sensor 302a, and the second sensed element 306b is detectable by both the first and second sensors 302a, 302b. In the present embodiment, the encoding wheel 304 has a single feature (the different dimension or extra length of the second sensed element 306b) that is detectable by the second sensor 302b. Only the period of the sensor corresponding to the single feature is used for the low rate, tamper proof signal.

FIG. 7E is a graph 350 showing a sensor 1 output signal 362 (e.g., the second sensor 302b) and a sensor 2 output signal 364 (e.g., the first sensor 302a) over time, as seen in FIGS. 7C and 7D. The sensing device 302 detects the characteristic, the sensing device 302 generates an output signal 362 corresponding to the characteristic.

As seen in FIG. 7E, the sensor 1 output signal 362 is generally flat, having a sensor 1 flat portion 352 encompassing most of the sensor 1 output signal 362. Referencing FIG. 7C and FIG. 7D, this is because the second sensor 302b does not have anything to sense for most of the rotation of the wheel 20 and disc 301. As seen in FIGS. 7D and 7E, a sensor 1 peak 354 occurs in the sensor 1 output signal 362 when the second sensor 302b senses/detects the second sensed element 306b as it passes the second sensor302b.

In the example, graph 350 shows a sensor 2 output signal 364 (e.g., the first sensor 302a) over time. The sensor 2 output signal 364 includes a sensor 2 flat portion 356 when no first sensed element 306a or second sensed element 306b is detected. The sensor 2 output signal 364 includes a first sensor 2 peak 358 when the first sensor 302a detects a first sensed element 306a. The sensor 2 output signal 364 also includes a second sensor 2 peak 360, that looks identical to the first sensor 2 peak 358, representing when the first sensor 302a detects the second sensed element 306b. In an embodiment, the first sensor 2 peak 358 and the second sensor 2 peak 360 are the same signal/voltage. In an alternate embodiment, the first sensor 2 peak 358 and the second sensor 2 peak 360 would be varying signals/voltages.

The computer or microprocessor located on the bicycle 10 analyzes the sensor 1 output signal 362 to determine if tampering has occurred, similar in manner to the description above. The sensor 2 output signal 364 alone or in combination with the sensor 1 output signal 362 may be used as a high-sampling rate wheel speed source. In this way, the varied characteristic of different radius/length of the second sensed element 306b is used by the bicycle 10 to determine if the speed sensing system 100 has been tampered with.

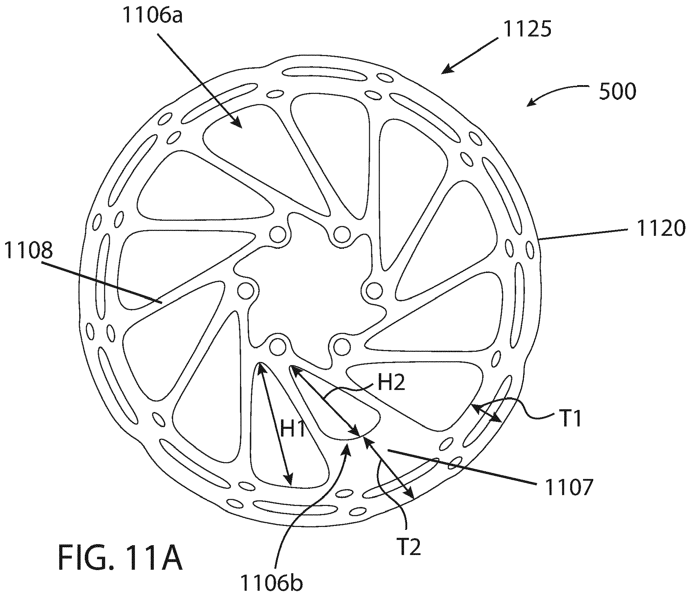

FIG. 11A is a front view of a rotor 1125 that is part of an example speed sensing system 500. The rotor 1125, having an outer circumference 1120, includes eleven first slots 1106a and a single second slot 1106b. In an alternate embodiment, there could be any number of first and second slots 1106a, 1106b. The first slot 1106a has a height H1. The first slot 1106a progressively becomes wider towards outermost point of the first slot 1106a. The outermost point of the first slot 1106a is a distance T1 from the outer circumference 1120 of the rotor 1125. The second slot 1106b has a height H2. The second slot 1106b also progressively becomes wider towards the outermost point of the second slot 1106b. Radially outward from the second slot 1106b, is an area 1107 that is formed, un-cut, or filled with the same material of the rotor 1125. The outermost point of the second slot 1106b is a distance T2 from the outer circumference 1120 of the rotor 1125. T2 includes T1 plus the area 1107. H1 is greater than H2. T2 is greater than T1. Between the first and second slots 1106a, 1106b are spines 1108.

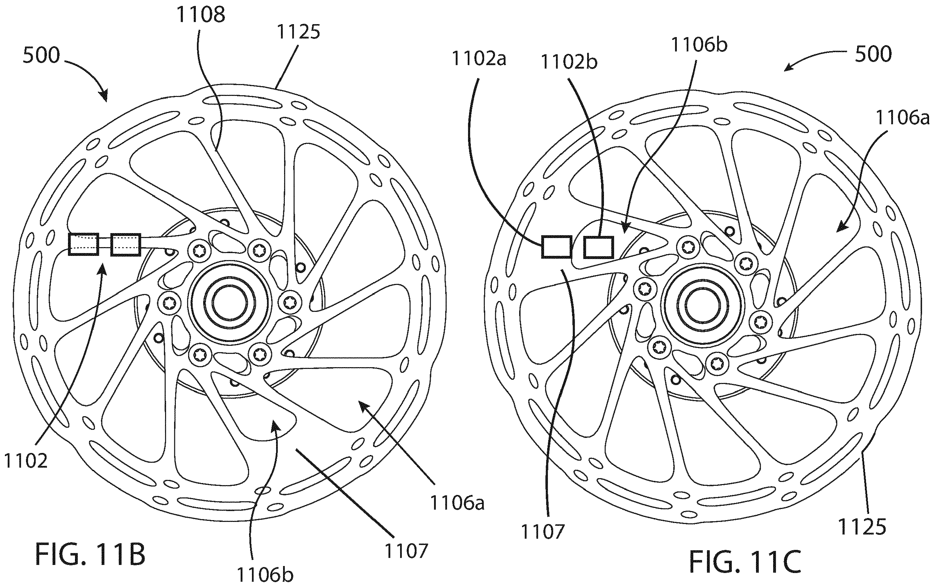

FIGS. 11B and 11C are front views of the rotor 1125 of the example speed sensing device 500, including a sensing device 1102, having a first sensor 1102a and a second sensor 1102b. In the example, the sensing device 1102 would be attached on the inside surface of the frame 52 of the bicycle 10, in a place that would overlap, but not touch, the shown area of the rotor 1125. As seen in FIG. 11B, the first sensor 1102a and the second sensor 1102b are overlapping a spine 1108 of the rotor, the portions directly underneath the first sensor 1102a and the second sensor 1102b are in dotted lines to indicate their location under the first sensor 1102a and the second sensor 1102b. In FIG. 11C, the rotor 1125 is in a rotated position, and the first sensor 1102a is overlapping the area 1107 and the second sensor 1102b is overlapping the slot 1106b.

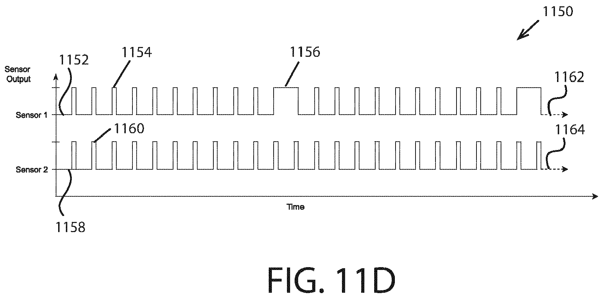

FIG. 11D is a graph 1150 showing a sensor 1 output signal 1162 (e.g., the first sensor 1102a) and a sensor 2 output signal 1164 (e.g., the second sensor 1102b) over time, as seen in FIGS. 11B and 11C. The sensing device 1102 detects the characteristic, the sensing device 1102 generates an output signal 1162 corresponding to the characteristic. In this case, the characteristic is the area 1107. As seen in FIG. 11D, the sensor 1 output signal 1162 has a sensor 1 flat portion 1152, a sensor 1 peak 1154, and a sensor 1 extended peak 1156. Referencing FIG. 11B, the sensor 1 flat portion 1152 corresponds to when the first sensor 1102a is overlapping one of the first slots 1106a. At that time, there is nothing for the first sensor 1102a to sense. A sensor 1 peak 1154 corresponds to when the first sensor 1102a passes over one of the spines 1108. Referring to FIG. 11C, the sensor 1 extended peak 1156 corresponds to when the first sensor 1102a senses/detects the area 1107 of the rotor 1125, a much larger area being sensed/detected than just a single spine 1108.

In the example, the graph 1150 shows a sensor 2 output signal 1164 (e.g., the second sensor 1102b) over time. The sensor 2 output signal 1164 includes a sensor 2 flat portion 1158 and a sensor 2 peak 1160. The sensor 2 flat portion 1158 occurs when the second sensor 1102b passes over or overlaps one of the first slots 1106a or the second slot 1106b. The sensor 2 peak 1160 occurs when the second sensor 1102b senses/detects a spine 1108.

The time period of both the first and second sensors 1102a, 1102b is used as a high rate wheel speed source. Only the period of the first sensor 1102a corresponding to the area 1107 is used for the low rate, tamper proof signal source. The computer or microprocessor located on the bicycle 10 analyzes the sensor 1 output signal 1162 to determine if tampering has occurred, similar in manner to the description above. The sensor 2 output signal 1164 alone or in combination with the sensor 1 output signal 1162 may be used as a high-sampling rate wheel speed source. In this way, the varied characteristic of the smaller slot sizes, allowing for an area 1107 on the rotor 1125, is used by the bicycle 10 to determine if the speed sensing system 100 has been tampered with.

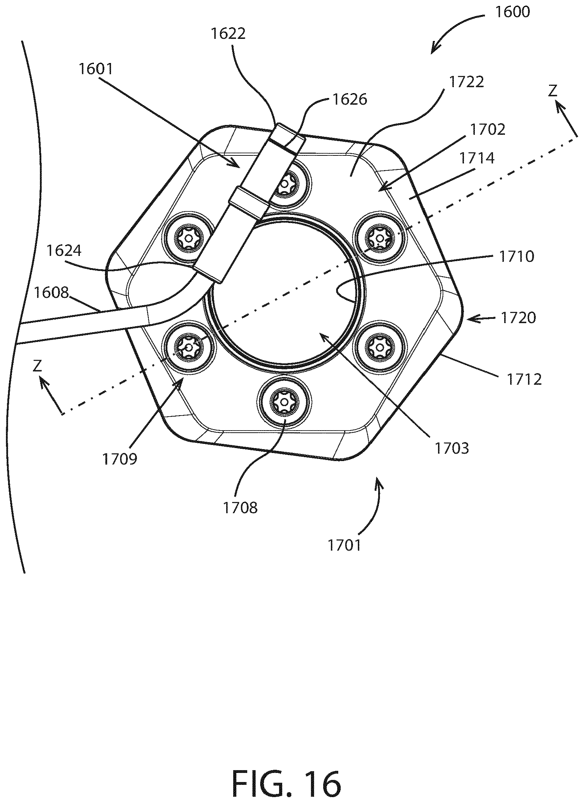

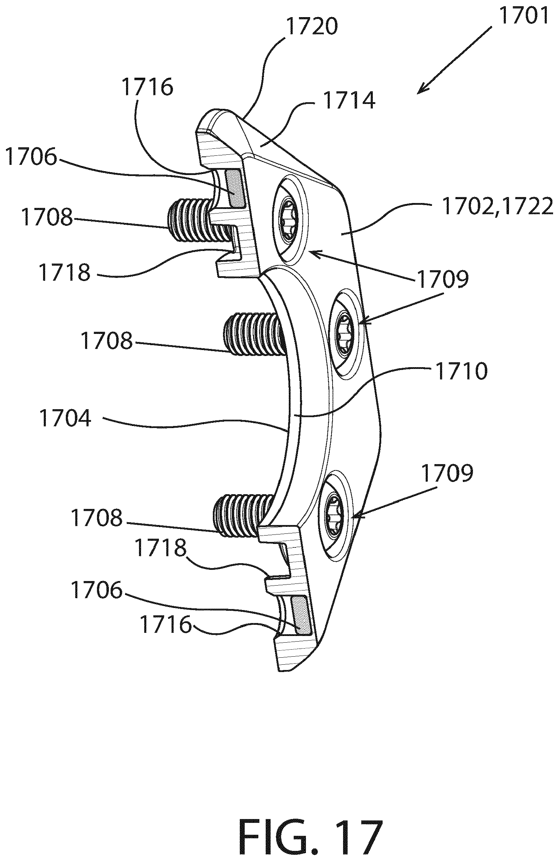

FIGS. 16 - 21 disclose an alternate embodiment for a speed sensing system 1600. As seen in FIGS. 16 and 17, speed sensing system 1600 includes a disc 1701 and a sensor 1601 of sensing device 1602. In the embodiment, the disc 1701 is shaped as a hexagon. In an alternate embodiment, the disc 1701 may have any shape. The disc 1701 includes insertion holes 1709 for receiving fasteners 1708 and through holes 1718 for the fasteners 1708 to extend through. In the example, the disc 1701 includes six insertion holes 1709. In an alternate embodiment, more or less insertion holes 1709 may be used with more or less fasteners 1708. In the embodiment, the through hole 1718 is just one groove extending all the way around the disc 1701. In an alternate embodiment, the through hole 1718 may be more or less cut outs, grooves, and/or holes.

The disc 1701 includes a central opening 1703 defined by an inner circumference 1710. The disc 1701 may further include flat edges 1712 that make up the outer perimeter 1720 of the disc 1701. The disc 1701 may further include a first side 1702 and a second side 1704. The first side 1702 may include a flat surface 1722, and an angled portion 1714 extending between the flat edges 1712 and the flat surface 1722.

On the second side 1704 of the disc 1701, a number of wells 1716 are included in the disc 1701 to hold a plurality of sensed elements 1706. In an embodiment, there may be any number of sensed elements 1706 and wells 1716. In the present embodiment, the sensed elements 1706 may be magnets. As with previous embodiments, all the sensed elements 1706 may be magnets oriented in the same direction except for one of the magnets. For example, all the sensed elements 1706 except one may be oriented such that a sensing device 1602 detects a north pole. Alternatively, all the sensed elements 1706 except one may be oriented such that the sensing device 1602 detects a south pole. Alternatively, the sensed elements 1706 may be any device or structure capable of being sensed. In the embodiment, the sensed elements 1706 are circular in shape. In an alternate embodiment, the sensed elements 1706 may have any shape.

The sensor 1601includes a first end 1622 and a second end 1624. The first end 1622 of the sensor 1601 includes a marking 1626. Attached to the second end 1624 of the sensor 1601 is a cable 1608.

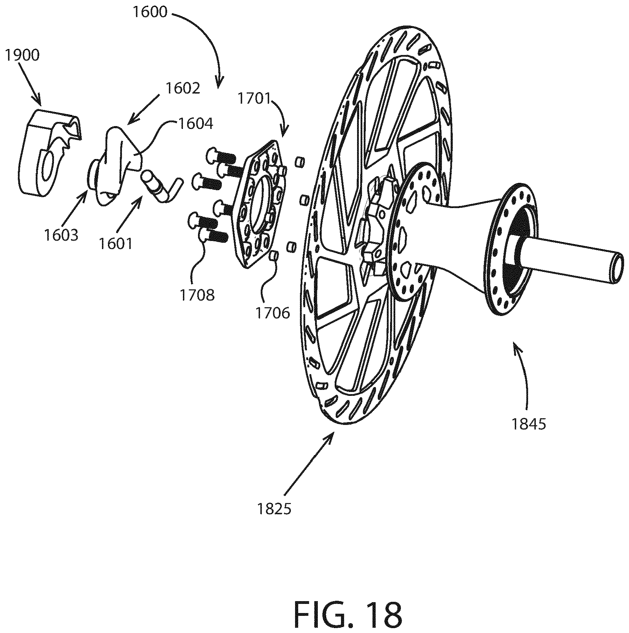

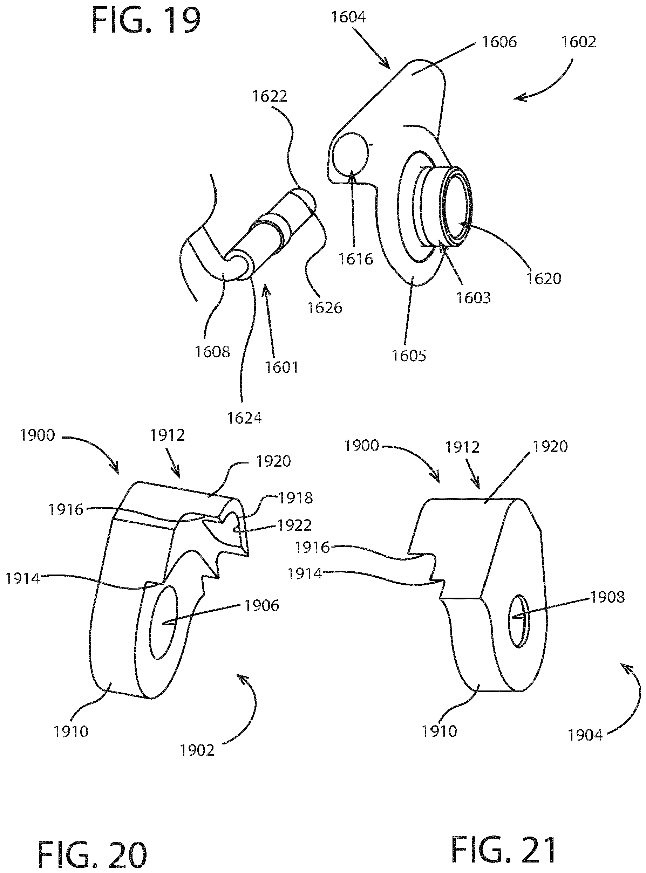

FIG. 18 is an exploded view of the speed sensing system 1600 of FIG. 16. FIG. 18 shows how the hub 1845 and rotor 1825 aligns with the disc 1701, the sensing device 1602, and a frame dropout 1900. FIG. 18 shows the sensing device 1602 includes a housing 1604 and a connection piece 1603 that engages with frame dropout 1900. As indicated by the figure, when the sensing device 1602 is assembled the sensor 1601 is located within the housing 1604. FIG. 19 shows the housing 1604 includes a sensor opening 1616 to receive the sensor 1601. Further, the housing 1604 may include a protruding portion 1606 where the sensor 1601 sits within the housing 1604. The housing 1604 may include a recessed portion 1605 that holds the connection piece 1603. The connection piece 1603 includes an axle opening 1620.

Looking back at FIG. 1, the axles 46 define two axes, a front wheel axis and a rear wheel axis. The two axes together form a horizontal hub plane. In the embodiment, the sensing device 1602 is configured for mounting on the bicycle. The sensing device 1602 includes a sensor 1601, and the sensor 1601 is mounted on the bicycle at an angle relative to the horizontal hub plane. The orientation of the position of the sensor 1601 at an angle will help hide the sensor 1601 and sensing device 1602, making the system more visually appealing. Further, the position of the sensor 1601 allows the marking 1626 around the sensor 1601 to align with at least one of the plurality of sensed elements 1706 when the speed sensing system 1600 is mounted to the bicycle. The marking 1626 is oriented to be on the inner side of the disc 1601 so that the marking is located adjacent to or nearly adjacent to the center of the sensed elements 1706, leading to better signal quality.

The angle of the sensor 1601 and/or the sensing device 1602 relative to the hub plane is between 15 degrees and 85 degrees. More specifically, the angle may be between 45 and 85 degrees. Even more specifically, the angle may be 75 degrees.

FIG. 20 is a perspective view of a frame dropout 1900 of FIG. 18. The frame dropout 1900 includes an inside surface 1902, an outside surface 1904, a bottom curved portion 1910, and a protruding portion 1912 that has an outer curved surface 1920. The inside surface 1902 includes an inside opening 1906, and the outside surface 1904 includes an outside opening 1908. The inside surface may include a first protrusion 1914 and a second protraction 1916. The second protrusion 1916 may include an inner curve 1918 and a cavity 1922.

The frame of the bicycle is configured to include the frame dropout 1900, and a formation is designed on the dropout 1900 to route the cable, such as cable 1608. In the example, the outer curved surface 1920, the inner curve 1918, and the cavity 1922 are a formation configured as a simple arc intended to help route the cable 1608.

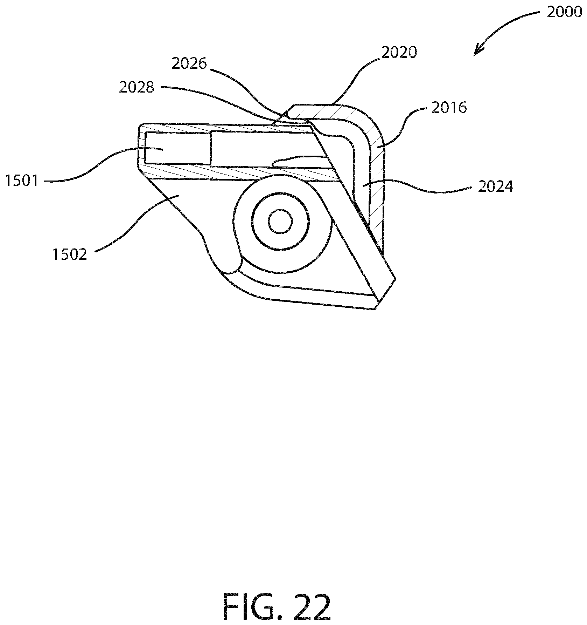

FIG. 22 is a side view of an alternate embodiment of a frame dropout 2000. Specifically, frame dropout 2000 ideally would be paired with a sensing device, such as sensing device 1502 of FIGS. 14-15C, where the sensor, such as sensor 1501 is not at an angle, but rather is oriented along a plane parallel to the horizontal hub plane. The frame dropout 2000 includes an outer curved surface 2020, a first protrusion (not shown, similar to the first protrusion 1914 of FIG 20), a second protrusion 2016, and an additional tube 2024. The additional tube 2024 may include an edge 2028. The second protrusion 2016 may include a second edge 2026. The edge 2028 and the second edge 2026 create a stepped edge/line configuration.

In FIG. 22, the additional tube 2024 is needed in order to route the cable when the sensor 1501 is in the horizontal position. In this embodiment, the cable will bend more sharply than in the embodiment of FIG. 20, thus cable routing may be easier with the frame dropout 1900 than with frame dropout 2000.

The frame of the bicycle is configured to include the frame dropout 2000, and a formation is designed on the dropout 2000 to route the cable. In the example, the outer curved surface 2020, the second protrusion 2016, and the tube 2024 are a formation configured as a stepped formation intended to help route the cable.

The e-bike control system 30 may include circuitry and processors and may be used alone or in combination to communicate with and control bicycle components. The processor or circuitry may include a memory and transmitter, receiver or transceiver.

The processor may include a general processor/microprocessor, digital signal processor, an application specific integrated circuit (ASIC), field programmable gate array (FPGA), analog circuit, digital circuit, combinations thereof, or other now known or later developed processor. The processor may be a single device or combinations of devices, such as through shared or parallel processing.

The memory may be a volatile memory or a non-volatile memory. The memory may include one or more of a read only memory (ROM), random access memory (RAM), a flash memory, an electronic erasable program read only memory (EEPROM), or other type of memory. The memory may be a secure digital (SD) memory card. In a particular non-limiting, exemplary embodiment, a computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device. Accordingly, the disclosure is considered to include any one or more of a computer-readable medium and other equivalents and successor media, in which data or instructions may be stored.

The memory is a non-transitory computer-readable medium and is described to be a single medium. However, the term "computer-readable medium" includes a single medium or multiple media, such as a centralized or distributed memory structure, and/or associated caches that are operable to store one or more sets of instructions and other data. The term "computer-readable medium" shall also include any medium that is capable of storing, encoding or carrying a set of instructions for execution by a processor or that cause a computer system to perform any one or more of the methods or operations disclosed herein.

In an alternative embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The e-bike control system 30 is configured to send data such as control signals and/or commands to bicycle components. The e-bike control system 30 provides for wireless communications in any now known or later developed format. Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

In accordance with various embodiments of the present disclosure, the methods described herein may be implemented with software programs executable by a computer system. Further, in an exemplary, non-limited embodiment, implementations can include distributed processing, component/object distributed processing, and parallel processing. Alternatively, virtual computer system processing can be constructed to implement one or more of the methods or functionality as described herein.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

As used in this application, the term 'circuitry' or 'circuit' refers to all of the following: (a)hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile computing device or a similar integrated circuit in server, a cellular network device, or other network device.

Processors suitable for the execution of a computer program include, by way of example, both general and special purpose microprocessors, and any one or more processors of any kind of digital computer. Generally, a processor receives instructions and data from a read only memory or a random access memory or both. The essential elements of a computer are a processor for performing instructions and one or more memory devices for storing instructions and data. Generally, a computer also includes, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, or a receiver to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While the illustrated bicycle 10 is an e-bike, the present disclosure has applications to bicycles of any type, including fully or partially suspensioned mountain bikes and others, as well as bicycles with mechanical (e.g., cable, hydraulic, pneumatic) and non-mechanical (e.g., wired, wireless) drive systems. For example, the illustrated handlebar assembly involves a flat bar configuration, however, other types of handlebar assemblies may be used as well, such as aero-bar configurations, bullhorn bars, riser bars, drop bars, or any other type of bicycle handlebar.

It is to be understood that the specific arrangement and illustrated components of the frame 12, the front wheel 18, the rear wheel 20, the drive train 40, the hydraulic front disc brake 22, and the hydraulic rear disc brake 24 are nonlimiting to the disclosed embodiments. For example, while the front brake 22 and the rear brake 24 are illustrated as hydraulic disc brakes, hydraulic rim brakes are contemplated and encompassed within the scope of the disclosure. Additionally, mechanical systems including mechanical rim brakes and mechanical disk brakes, as well as other electronic, hydraulic, pneumatic, and mechanical systems, or combinations thereof, such as suspension systems, are contemplated and encompassed within the scope of the present disclosure.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations and/or acts are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that any described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A speed sensing system for a bicycle, comprising:
a sensing device configured for mounting on the bicycle, wherein the sensing device includes a sensor and the sensor is configured for mounting at an angle relative to a horizontal hub plane; and
a plurality of sensed elements configured to be sensed by the sensing device.

2. The speed sensing system of claim 1, wherein the angle is between 15 degrees and 85 degrees, wherein preferably the angle is between 45 and 85 degrees, wherein most preferably the angle is 75 degrees.

3. The speed sensing system of claim 1 or 2, wherein the sensing device additionally includes a housing and a cable, the sensor located within the housing.

4. The speed sensing system of one of the preceding claims, wherein the sensor includes a first end and a second end, the first end includes a marking, and the second end attaches to the cable.

5. The speed sensing system of claim 4, wherein the marking is configured to align with at least one of the plurality of sensed elements when the speed sensing system is mounted on the bicycle.

6. The speed sensing system of one of the preceding claims, wherein a frame of the bicycle is configured to include a dropout, wherein a formation is designed on the dropout to route the cable.

7. The speed sensing system of claim 6, wherein the formation is a simple arc.

8. The speed sensing system of one of the preceding claims, wherein the plurality of sensed elements are magnets.

9. A speed sensing system for a bicycle, comprising:
a sensing device configured for mounting on the bicycle, wherein the sensing device includes a sensor is mounted on a plane parallel to a horizontal hub plane; and
a plurality of sensed elements configured to be sensed by the sensing device.

10. The speed sensing system of claim 9, wherein the sensing device additionally includes a housing and a cable, the sensor located within the housing.

11. The speed sensing system of claim 9 or 10, wherein the sensor includes a first end and a second end, the first end is a free end, and the second end attaches to the cable.

12. The speed sensing system of one of claims 9 to 11, wherein a frame of the bicycle is configured to include a dropout, wherein a formation is designed on the dropout to route the cable.

13. The speed sensing system of claim 12, wherein the formation is a stepped formation.

14. The speed sensing system of one of claims 9 to 13, wherein the plurality of sensed elements are magnets.
